# NEUE EUROPÄISCHE PATENTSCHRIFT

(11) **EP 0 033 936 B2**
(45) Veröffentlichungstag und Bekanntmachung des Hinweises auf die Entscheidung über den Einspruch: **14.09.1994**
(45) Hinweis auf die Patenterteilung: 29.01.1986
(21) Anmeldenummer: 81100740.0
(22) Anmeldetag: 02.02.1981
(51) Int. Cl.: B62H 5/16

(54) **Schwenkbügelschloss für ein Fahrzeug, insbesondere ein Zweiradfahrzeug**
Lock with swingable member for a vehicle, in particular a bicycle
Serrure à partie pivotante pour un véhicule, en particulier une bicyclette

(30) Priorität: 12.02.1980 DE 3005217
(43) Veröffentlichungstag der Anmeldung: 19.08.1981
(73) Patentinhaber: Aug. Winkhaus GmbH & Co. KG, D-48291 Telgte (DE)
(72) Erfinder: Waterkamp, Manfred, D-4405 Nottuln (DE); Kortenbrede, Ludger, D-4404 Telgte (DE)
(74) Vertreter: Weickmann, Heinrich, Dipl.-Ing.

(56) Entgegenhaltungen:
- CH-A- 114 204
- CH-A- 278 506
- DE-A- 1 755 954
- DE-A- 2 360 936
- DE-C- 95 729
- DE-C- 349 775
- DE-C- 616 301
- FR-A- 1 002 281
- GB-A- 260 267
- US-A- 4 180 998

## Beschreibung

Die Erfindung betrifft ein Schwenkbügelschloss nach dem Oberbegriff des Anspruchs 1.

Ein solches Schwenkbügelschloss ist aus der US-A-4 180 998 bekannt.

Nach der US-A-4 180 998 ist die Schwenksicherung des Schwenkbügels in der Fahrstellung dadurch gewährleistet, dass innerhalb der Schwenknabe eine Mantelausnehmung des Schwenkbügels mit einer Mantelausnehmung eines Schwenkzapfens zusammenwirkt. Diese Ausführungsform hat einen fertigungsmässig schwierigen Aufbau.

Weiterhin steht bei der bekannten Ausführungsform für die Schwenksicherung in der Fahrstellung nur ein verhältnismäßig kleiner Hebelarm zur Verfügung, der eine hochpräzise Ausführung der zusammenwirkenden Teile erfordert, um überhaupt eine zuverlässige Schwenksicherung in Fahrstellung und gegebenenfalls in der Absperrstellung zu gewährleisten. Schließlich besteht die Gefahr eines Verklemmens der Schwenklagerung durch die Mantelausnehmung des Schwenkbügels einerseits und die Mantelausnehmung des Schwenkzapfens andererseits, insbesondere in Zwischenstellungen.

Der Erfindung liegt die Aufgabe zugrunde, bei einem Schwenkbügelschloß gattungsgemäßer Art einen vereinfachten Aufbau mit geringerem Fertigungsaufwand zu ermöglichen, wobei ein materialsparender, platzsparender und formschöner Aufbau gefordert wird, der auch unter dem Gesichtspunkt der Berührungsfreundlichkeit vorteilhaft ist.

Zur Lösung dieser Aufgabe dienen die Massnahmen nach dem kennzeichnenden Teil des Anspruchs 1.

Aus der US-A-2 691 289 ist ein Schwenkbügelschloss bekannt, bei dem der Schwenkbügel auf einem rahmenfesten Lagergehäuse um eine Schwenkachse gelagert ist. Der Schwenkbügel ist dabei aber nicht seinerseits drehbar in einer Schwenknabe gelagert; vielmehr bildet das schwenkachsenseitige Ende des Schwenkbügels selbst einen Schwenkkörper, welcher auf dem Lagergehäuse schwenkbar gelagert ist. Zum Feststellen des Schwenkbügels in der Fahrstellung und in der Absperrstellung ist in dem Schwenkkörper ein Schliesszylinder aufgenommen, dessen Achse sich in Richtung der Längsachse des Schwenkbügels erstreckt und dessen Zylinderkern über eine Nokkensteuerung einen parallel zur Schwenkbügelachse geführten Sperrbolzen steuert; dabei ist dieser Sperrbolzen zum Zusammenwirken mit je einer Sperrbolzenaufnahme des Lagergehäuses für die Fahrstellung und die Absperrstellung bestimmt.

Durch offenkundige Vorbenutzung eines Schlosses Basta Typ 100 E ist ein Schwenkbügelschloß für ein Fahrzeug, insbesondere ein Zweiradfahrzeug bekannt, welches von den Schwenkbügelschlössern gattungsgemäßer Art dadurch grundsätzlich abweicht, daß das Sicherungselement und damit auch die Sicherungselementenaufnahme nicht im Nabenbereich vorgesehen sind. Das Sicherungselement ist vielmehr im Bereich des freien Endes des Schwenkbügels angeordnet und die Sicherungselementenaufnahme ist an einem Lagergehäuse angeordnet, welches die Schwenknabe aufnimmt und eine Verlängerung besitzt, die sich parallel zu dem in Fahrstellung befindlichen Schwenkbügel bis in dessen freien Endbereich erstreckt, um dort die Sicherungselementenaufnahme tragen zu können. Damit steht zwar in der Fahrstellung ein großer Hebelarm für die Sicherung des Schwenkbügels zur Verfügung. Das Schwenkbügelschloß nimmt aber dadurch eine vom Standpunkt der Berührungsfreundlichkeit und des Aussehens her äußerst unbefriedigende Gestaltung an und erfordert einen grossen Materialaufwand für das Lagergehäuse. Das Lagergehäuse weist eine Vielzahl von Ecken und Kanten auf, die äußerst berührungsunfreundlich sind. Andererseits ist das Aussehen des Schwenkbügelschlosses durch das ausladende Lagergehäuse und dessen blockige Form ungünstig.

Bei der erfindungsgemäßen Gestaltung ist hinsichtlich des Sicherungshebelarms in der Fahrstellung ein Kompromiss geschlossen zwischen der aus der US-PS 4 180 998 bekannten Lösung einerseits und der durch die offenkundige Vorbenutzung des Basta-Schlosses bekannten Lösung andererseits. Es hat sich gezeigt, daß die Bemessung des Sicherungshebelarms ausreichend ist, wenn das Sicherungselement im Nabenbereich eben aus der Schwenknabe vorsteht und mit einer in entsprechendem Radialabstand von der Schwenkachse gelegenen Sicherungselementenaufnahme auf der Kante der Umfangsfläche der Schwenknabe folgenden Seitenwand zusammenwirkt. Andererseits wird durch die Ausbildung der Schwenknabe mit kreisförmigem Umriß und die Anordnung der Sicherungselementenaufnahme auf einer, entsprechend der Lage des Sicherungselements im Nabenbereich, ebenfalls im Nabenbereich gelegenen und der Umfangsfläche der Schwenknabe folgenden Seitenwand, eine äußerst berührungsfreundliche und kompakte Bauform erzielt, wobei die Kompaktheit sowohl vom Aussehen her als auch vom Materialeinsatz her vorteilhaft ist.

Durch die Massnahmen der Ansprüche 2 und 3 wird ein berührungsfreundlicher Aufbau gefördert der materialsparend, platzsparend und formschön ist.

Die aus der US-A-4 180 998 an sich bekannte Massnahme des Anspruchs 4 sorgt für eine platzsparende und einfache Schwenklagerung.

Die Massnahme des Anspruchs 5 ist unter dem Gesichtspunkt einfacher Bedienung von Interesse.

Der Anspruch 6 zeigt die verschiedenen Möglichkeiten der Blockierung des Schwenkbügels in der Absperrstellung auf, wobei unter dem Gesichtspunkt der Sicherheit gegen unbefugte Aufbrechversuche die Lösung mit dem Sperrlager den Vorzug verdient.

Die Massnahme des Anspruchs 7 verhindert unter allen Umständen, dass der Schwenkbügel aus der Sicherungsdrehstellung unbeabsichtigt in den Radbereich einschwenken kann.

Die Massnahmen der Ansprüche 8 und 9 sind unter dem Gesichtspunkt einfacher Gestaltung vorteilhaft.

Der Anspruch 10 zeigt verschiedene Möglichkeiten der Schwenkbügelschlosshandhabung auf. Die erste Alternative hat den Vorteil, dass Unbefugte bei nichtgesperrtem Schloss den Schlüssel nicht abziehen können. Die zweite Alternative bietet den Vorteil. dass der Schlüssel bei nicht gesichertem Rad stets unverlierbar mitgeführt wird und im Augenblick des Bedarfs zur Verfügung steht.

Die Massnahmen der Ansprüche 11 und 12 sorgen für einen konstruktiv einfachen Aufbau des Schwenkbügelschlosses.

Die Massnahme des Anspruchs 13 sichert einen hohen Bedienungskomfort.

Die Massnahme des Anspruchs 14 sorgt insbesondere dafür, dass das Fahrrad in einfachster Weise betriebsbereit gemacht werden kann.

Die Massnahmen der Ansprüche 15 bis 18 sorgen für einen einfachen störunanfälligen und dem guten Aussehen förderlichen Aufbau der Gesamtkonstruktion.

Die Massnahme des Anspruchs 19 sorgt dafür, dass das Schwenkspannelement unter Vorspannung leicht eingebaut werden kann.

Die Massnahme des Anspruchs 20 ist vom Bedienungskomfort her insofern interessant, als man nach dem Lösen der Drehsperre nur noch den Schwenkbügel in die Drehlösestellung zu bringen und ihn aus der Absperrstellung zu verschwenken braucht, ohne dass irgendwelche weiteren Manipulationen an der Drehsperre, also insbesondere an einem Schliesszylinder, erforderlich sind, um den Schwenkbügel in der Fahrstellung zu sichern. Dieser Vorteil wird noch erhöht, wenn der Schwenkbügel in Richtung auf die Fahrstellung vorgespannt ist: Dann springt der Schwenkbügel nach Lösen der Drehsperre und Drehen des Schwenkbügels in die Lösedrehstellung selbsttätig bis in der Fahrstellung und dreht sich dann in die Sicherungsdrehstellung. Eine stabile Zwischenstellung des Schwenkbügels, in welcher dieser einerseits nicht gesichert ist und anderseits nicht in den Durchbruch des Rads eingreift, ist bei dieser Ausführungsform nicht denkbar, so dass die Gefahr ausgeschlossen ist, der Benutzer des Fahrzeugs könnte bei nicht gesichertem Schwenkbügel anfahren, und der Schwenkbügel könnte danach infolge Erschütterung in den Durchbruch des Rads blockierend und zerstörend eingreifen. Alternativ hierzu kann die Ausbildung gemäß Anspruch 21 vorgesehen sein

Die Massnahme des Anspruchs 22 ist herstellungstechnisch vorteilhaft.

Die Massnahme des Anspruchs 23 bildet den Gedanken des Anspruchs 21 weiter mit dem Ziele, ein Anfahren und nachträgliches Einschwenken des Schwenkbügels in den Raddurchbruch unter allen Umstanden zu vermeiden.

Die Massnahme des Anspruchs 24 erschwert den Zugang zu dem abgeflachten Schwenkbügelende und damit das Ansetzen eines Drehwerkzeugs an dem Schwenkbügel durch einen Unbefugten.

Die Massnahme des Anspruchs 25 stellt eine Montagehilfe für das Schwenklager und das Sperrlager dar, wenn diese gesondert angebracht werden.

Die Massnahme des Anspruchs 26 ist insbesondere im Hinblick auf das Nachrüsten eines bereits aus dem Herstellerwerk entlassenen Fahrrads vorteilhaft, wie besonders im Anspruch 28 ausgeführt wird.

Die Massnahme des Anspruchs 29 empfiehlt sich im Hinblick auf die geforderte Berührungsfreundlichkeit.

Der Anspruch 31 zeigt eine Möglichkeit auf, auch bei Nachrüstung Schwenklager und Sperrlager einzeln am Fahrradrahmen zu befestigen. Hierzu gibt der Anspruch 32 eine Weiterbildung an, die insbesondere darauf abstellt, das unbefugte Lösen des Schlosses auf einfache Weise zu verhindern.

Durch die Massnahme des Anspruchs 33 kann ein Übermass des Schwenkbügels gegenüber der lichten Weite der Radgabel kompensiert werden.

Die Massnahme des Anspruchs 34 versteht sich wieder unter dem Gesichtspunkt der gewünschten Berührungsfreundlichkeit.

Die Ausbildung gemäss Anspruch 35 stellt eine Alternativlösung dar, die auch bei Fehlen einer Schwenkvorspännung auf den Schwenkbügel eine zuverlässige Sicherung dagegen gewährleistet, dass ein Anfahren und ein danach eintretendes unbeabsichtigtes Einschwenken des Schwenkbügels in den Raddurchbruch ausgeschlossen ist. Bei dieser Ausführungsform, die übrigens nicht an das Fehlen einer Schwenkvorspannung gebunden ist, muss man unvermeidlich vor dem Anfahren des Fahrzeugs den Schwenkbügel aus der Drehsperrstellung in die Drehlösestellung drehen und danach in die Fahrsellung verschwenken und sichern, damit das Fahrrad überhaupt anfahren kann.

Die beiliegenden Figuren erläutern die Erfindung anhand von Ausführungsbeispielen. Es stellen dar:
Fig. 1 eine perspektivische Ansicht eines erfindungsgemässen Schwenkbügelschlosses an einem Fahrrad;
Fig. 2 einen Schnitt nach Linie 11-11 der Fig. 1;
Fig. 3 einen Schnitt nach Linie 111-111 der Fig. 2;
Fig. 4 einen Schnitt nach Linie IV-IV der Fig. 2;
Fig. 5 eine perspektivische Ansicht des Schwenklagers und der Schwenknabe mit Schwenkbugel im auseinandergenommenen Zustand:
Fig. 6 eine perspektivische Ansicht der zerlegten Schwenknabe;
Fig. 7 den Eingriff des Sicherungselements des Schwenkbügels in die Sicherungselementenaufnahme;
Fig. 8 den Eingriff des als zusätzliches Sperrelement dienenden Sicherungselements in eine zusätzliche Sicherungselementenaufnahme:
Fig. 9 eine abgewandelte Ausführungsform der Erfindung;
Fig. 10 Sicherungselement und Sicherungselementenaufnahme bei der Ausführungsform nach Fig. 9;
Fig. 11 und 12 Schnitte entsprechend Fig. 3 und 4 bei der Ausführungsform nach Fig. 9 und 10;
Fig. 13 ein erfindungsgemässes Schwenkbügelschloss, bei dem das Schwenklager und das Sperrlager an einem U-Bügel befestigt sind,
Fig. 14 einen Schnitt nach Linie XIV-XIV der Fig. 13;
Fig. 15 einen Schnitt nach Linie XV-XV der Fig. 13;
Fig. 16 einen Schnitt nach Linie XV-XV der Fig. 13 bei einer anderen Ausbildung des U-Bügels;
Fig. 17 einen Schnitt nach Linie XV-XV der Fig. 13, bei einer nochmals geänderten Ausführungsform des U-Bügels;
Fig. 18 eine weitere Ausführungsform eines erfindungsgemässen Schwenkbügelschlosses, bei welchem das Schwenklager und das Sperrlager einzeln an den Schenkeln einer Radgabel festgeklemmt sind.
Fig. 19 ein Detail zur Fig. 18.

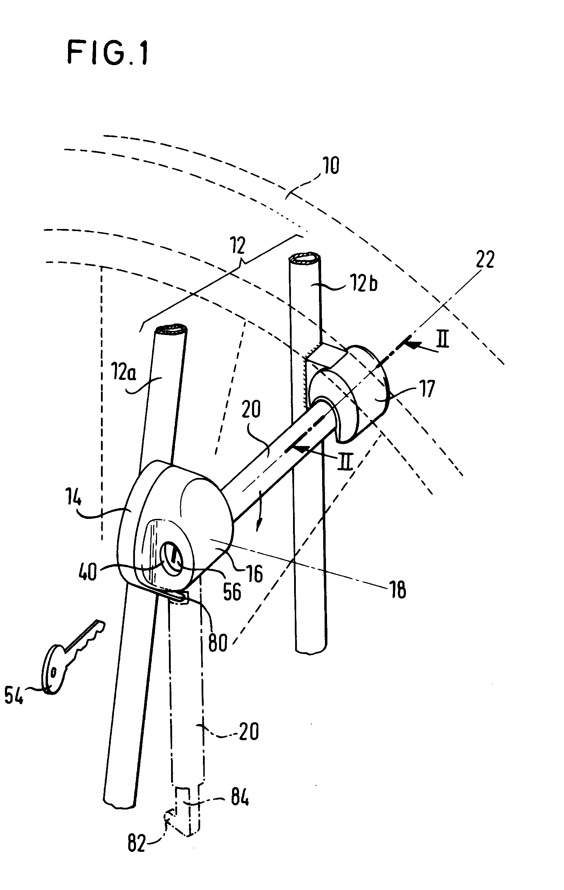

In Fig. 1 erkennt man das mit Speichen ausgerüstete Hinterrad 10 eines Fahrrads und die dieses Hinterrad aufnehmende Hinterradgabel 12 mit den Gabelschenkeln 12a und 12b. An dem Gabelschenkel 12a ist ein Schwenklager 14 angeschweisst, an dem Gabelschenkel 12b ein Sperrlager 17. Auf dem Schwenklager 14 ist eine Schwenknabe 16 um eine Schwenkachse 18 schwenkbar gelagert. In der Schwenknabe 16 ist ein Schwenkbügel 20 um seine Längsachse 22 drehbar gelagert.

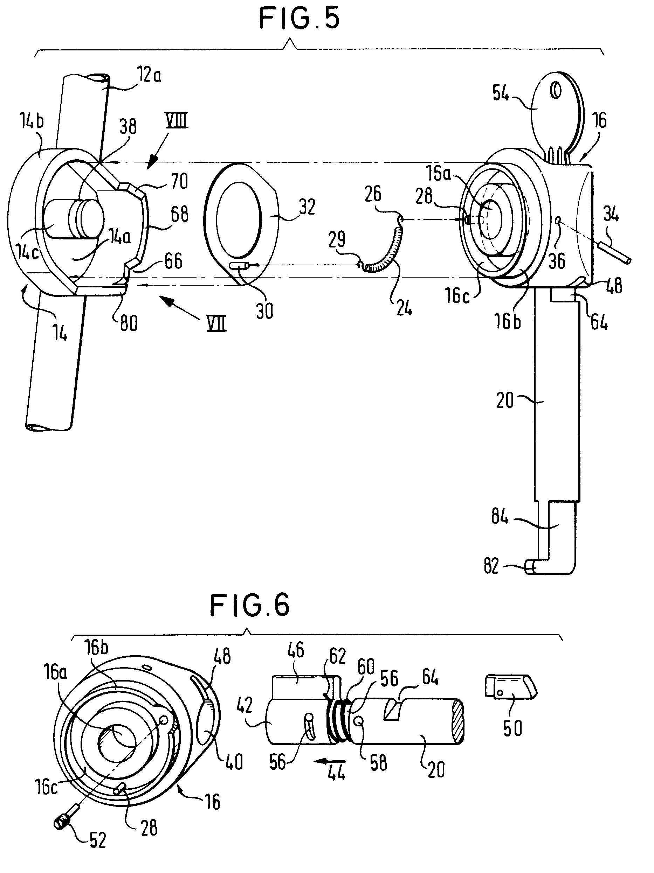

Die Ausbildung des Schwenklagers und der Schwenknabe ist im einzelnen in Fig. 5 und 6 dargestellt. Das Schwenklager 14 ist von einer an dem Rahmenschenkel 12a festgeschweissten Schwenklagerplatte 14a gebildet, welche von einer Eingriffswand 14b topfartig umschlossen ist. Im Zentrum der Schwenklagerplatte 14a erhebt sich ein Schwenkzapfen 14c. Die Schwenknabe weist eine Schwenkbohrung 16a auf, welche den Schwenkzapfen 14c aufnimmt. Weiter weist die Schwenknabe einen Ringfortsatz 16b auf, welcher zur Anlage an der inneren Umfangsfläche der Engriffswand 14b bestimmt ist, und innerhalb des Ringfortsatzes 16b ist ein gekrümmter Kanal 16c ausgebildet, welcher konzentrisch zu dem Schwenkzapfen und der Schwenkbohrung 14c bzw. 16a ist. Dieser gekrümmte Kanal 16c ist zur Aufnahme eines Schwenkspannelements in Form einer Schraubenzugfeder 24 bestimmt. Die Schraubenzugfeder wird mit ihrem einen Ende 26 an einem Zapfen 28 eingehakt, welcher in der Nabe 16 am Boden des gekrümmten Kanals 16c angeordnet ist. Das andere Ende 29 der Schraubenzugfeder 24 wird an einem Zapfen 30 eingehakt, welcher an einer Verankerungsscheibe 32 angebracht ist. Die Verankerungsscheibe 32 hat den gleichen unrunden Umriss wie die Eingriffswand 14b des Schwenklagers 14. Zur Montage wird der Haken 26 in den Zapfen 28 und der Haken 29 in den Zapfen 30 eingehängt, und das Verankerungsteil 32 wird an der Schwenknabe 16 zur Anlage gebracht. Danach wird die Schwenknabe 16 auf das Schwenklager 14 aufgesteckt, wobei durch entsprechende Verdrehung des Verankerungsteils 32 die Schraubenzugfeder 24 auf Vorspannung gehalten wird. Das Verankerungsteil 32 rastet dann innerhalb des Umrisses der Eingriffswand 14b ein, so dass die Vorspannung erhalten bleibt. Hierauf wird ein Sicherungsstift 34 in eine Bohrung 36 der Schwenknabe 16 eingeschlagen, welcher in eine Ringnut 38 des Schwenkzapfens 14c eingreift, das Drehen der Schwenknabe gegenüber dem Schwenklager 14 aber nicht behindert.

In einen diametral durchgehenden Kanal 40 der Schwenknabe 16 wird ein Profilschliesszylinder 42 mit Hahnprofil eingesetzt. Der Kanal 40 ist auf einem Teil seiner Länge (siehe Fig. 6) ebenfalls mit Hahnprofil ausgeführt, endet aber an dem anderen Ende (siehe Fig. 1) als Rundkanal. Der Profilzylinder 42 wird, wie in Fig. 6 dargestellt in Pfeilrichtung 44 eingeschoben, solange bis der Profilbart 46 am Ende des Kanalteils 48 zum Anschlag kommt. Dann wird in das offene Ende des Kanalteils 48 ein Schliessstück 50 eingeschoben und durch eine Madenschraube 52 festgesetzt. Der Profilschliesszylinder weist einen mittels Schlüssel 54 (Fig. 1) drehbaren Zylinderkern 56 auf. An dem in Fig. 6 rechten Ende des Zylinderkerns 56 ist durch einen Splint 58 der Schwenkbügel 20 in Achsflucht mit dem Zylinderkern 56 drehfest mit diesem verbunden. Ein Drehvorspannelement in Form einer Schraubentorsionsfeder 60 ist mit ihrem einen Ende in dem Zylinderkern 56 verankert (nicht dargestellt) und weist ein anderes Ende 62 auf, welches zur Anlage an dem Kanalteil 48 bestimmt ist. Beim Einbau des Profilschliesszylinders 42 in den Kanal 40 wird der Schraubentorsionsfeder 62 eine Vorspannung erteilt.

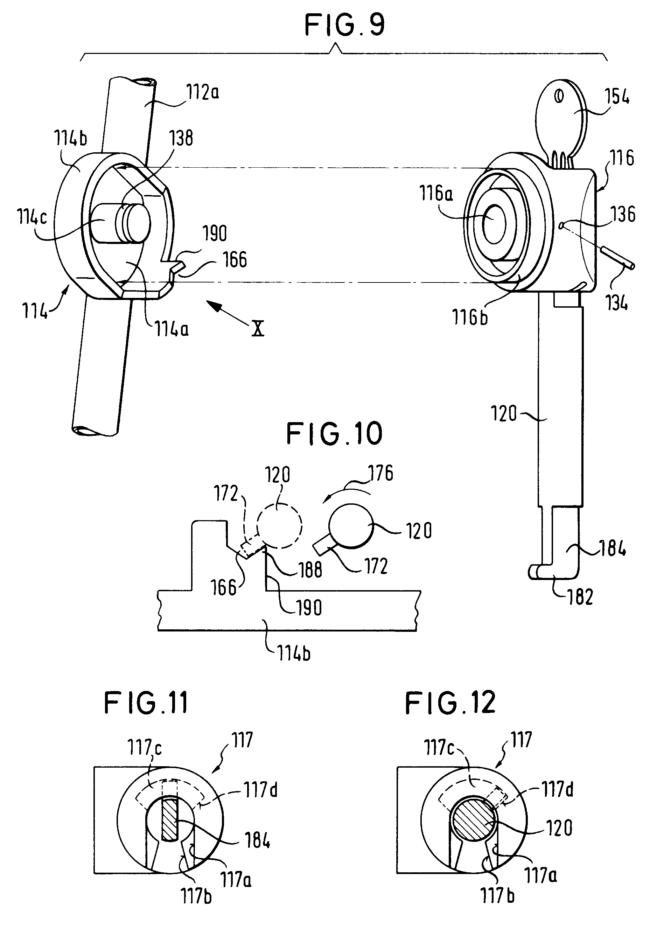

An dem Schwenkbügel 20, ist wie insbesondere aus Fig. 5 und 7 zu ersehen, unmittelbar an die Schwenknabe angrenzend jedoch ausserhalb dieser Schwenknabe 16 eine Ausfräsung 64 vorgesehen. An der Eingriffswand 14b ist, wie aus Fig. 7 zu ersehen, (Fig. 7 zeigt eine Abwicklung der Eingriffswand 14 in dem bei Betrachtungsrichtung VII gemäss Fig. 5 erkennbaren Umfangsbereich) eine Sicherungselementenaufnahme in Form einer Kerbe 66 eingearbeitet. An diese Kerbe 66 schliesst sich eine Stützbahn 68 an und an diese Stützbahn 68 eine Sperrelementenaufnahme in Form einer steil abfallenden Flanke 70. Durch die Einfräsung 64 ist an dem Schwenkbügel 20 eine Ecke 72 gebildet, die in erster Linie als Sicherungselement, aber auch als Sperrelement wirkt.

In Fig. 7 greift das Sicherungselement 72 in die Sicherungselementenaufnahme 66 ein; diese Stellung entspricht der in Fig. 1 strichpunktiert dargestellten Stellung des Schwenkbügels 20. Die durch die Schraubentorsionsfeder 60 erzeugte Vorspannung sucht in Fig. 7 das Sicherungselement 72 in die Sicherungsaufnahme 66 hinzudrehen. Die in Fig. 7 dargestellte Drehstellung des Schwenkbügels 20 wird als die Sicherungsdrehstellung bezeichnet. Diese Sicherungsdrehstellung kann so eingestellt sein, dass der Schlüssel des Profilschliesszylinders 42 gezogen werden und damit der Schwenkbügel 20 unverdrehbar festgelegt werden kann; in diesem Fall kann das Sicherungselement 72 aus der Sicherungselementenaufnahme 66 überhaupt nicht austreten. Es ist aber auch denkbar, dass die Sicherungsdrehstellung gemäss Fig. 7 ein Ziehen des Schlüssels 54 aus dem Profilschliesszylinder 42 nicht zulässt. In diesem Fall ist der Eingriff des Sicherungselements 72 in die Sicherungselementenaufnahme 66 durch die Federkraft der Schraubentorsionsfeder 60 gewährleistet. Wenn der Schwenkbügel 20 sich in der Sicherungsdrehstellung gemäss Fig. 7 befindet, so kann der Schwenkbügel 20 aus der in Fig. 1 strichpunktiert gezeichneten Stellung nicht in die in Fig. 1 ausgezogen gezeichnete Stellung verschwenkt werden. In der in Fig. 1 strichpunktiert eingezeichneten Stellung, der Fahrstellung, befindet sich der Schwenkbügel 20 ausser Eingriff mit dem Rad 10. Um den Schwenkbügel in die ausgezogene Stellung gemäss Fig. 1, die Absperrstellung, verschwenken zu können, muss zunächst der Schwenkbügel 20 aus der Sicherungsdrehstellung gemäss Fig. 7 durch Drehen entgegen der Wirkung der Schraubentorsionsfeder 60 verdreht werden, so dass das Sicherungselement 72 aus der Sicherungselementenaufnahme 66 austritt. Dann erst kann der Schwenkbügel verschwenkt werden, wobei sich das Sicherungselement 72 dann über die Stützbahn 68 bewegt, bis das Sicherungselement 72, nunmehr als Sperrelement wirkend, in die Sperrelementenaufnahme, d.h. hinter die Flanke 70 einfällt. Der Schwenkbügel 20 kann sich, nachdem das Sperrelement 72 die Flanke 70 überschritten hat soweit in Richtung des Pfeiles 76 unter der Wirkung der Schraubentorsionsfeder 60 drehen, dass der Schwenkbügel 20 eine Sperrdrehstellung erreicht. In dieser Sperrdrehstellung hat der Zylinderkern 56 gegenüber dem Gehäuse des Profilschliesszylinders 42 eine Winkelstellung erreicht, in welcher der Schlüssel 54 gezogen werden kann, so dass der Schwenkbügel 20 fortan nicht mehr gedreht werden kann. Der Schwenkbügel 20 befindet sich dann in der ausgezogenen Stellung gemäss Fig. 1 und kann, da er nicht mehr gedreht werden kann, wegen des Eingriffs des Sperrelements 72 in die Sperrelementenaufnahme 70 fortan auch nicht verschwenkt werden. Das Rad ist gesperrt. Fig. 8 zeigt den Eingriff des Sperrelements 72 in die Sperrelementenaufnahme 70. Die Fig. 8 zeigt eine Teilabwicklung der Eingriffswand 14b in Pfeilrichtung VIII der Fig. 5.

Soll das Fahrrad entsperrt werden, so muss der Schlüssel 54 wieder gesteckt werden. Dann kann der Schwenkbügel 20 mit Hilfe des Schlüssels gegen die Wirkung der Schraubentorsionsfeder 60 aus der Sperrdrehstellung gemäss Fig. 8 in die in Fig. 8 ebenfalls aber gestrichelt eingezeichnete Löse-Drehstellung gedreht werden. Die Schraubenzugfeder 24 bewirkt dann ein Zurückschwenken des Schwenkbügels 20 aus der in Fig. 1 ausgezogen eingezeichneten Stellung in die strichpunktierte eingezogene Stellung, wobei das Sicherungselement 72 über die Stützbahn 68 gleitet und schliesslich unter der Wirkung der Schraubentorsionsfeder 60 wieder in die Sicherungselementenaufnahme 66 einrastet. Eine an der Eingriffswand 14b angeordnete Spitze 80 verhindert ein Weiterbewegen des Schwenkbügels 20 über die in Fig. 1 strichpunktiert eingezeichnete Stellung hinaus.

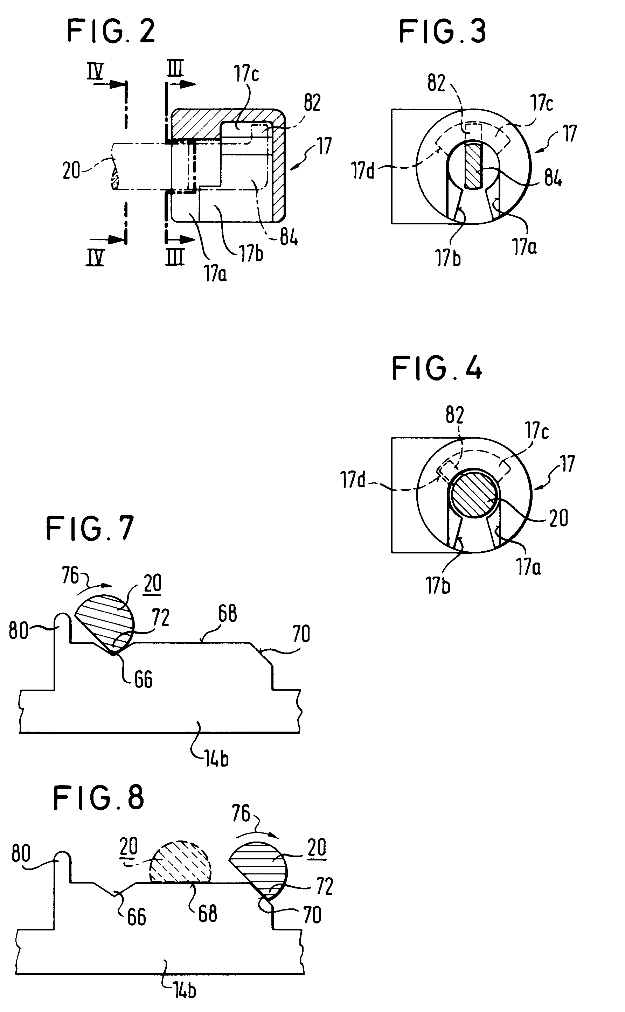

Da wegen des langen Hebelarms des Schwenkbügels 20 eine Sperrung des Schwenkbügels 20 in der in Fig. 1 gezeichneten Absperrstellung allein durch den Eingriff des Sperrelements 72 in die Sperrelementenaufnahme 70 gemäss Fig. 8 unzureichend sein könnte und ein gewaltsames Aufbrechen des Schwenkbügelschlosses in Extremfällen noch ermöglichen könnte, ist das Sperrlager 17 vorgesehen. Dieses Sperrlager wirkt mit einem Sperrhaken 82 am freien Ende des Schwenkbügels 20 (siehe Fig. 1) zusammen. Im einzelnen ist das Sperrlager und der mit ihm zusammenwirkende Sperrhaken in den Fig. 2 bis 4 dargestellt. Das Sperrlager weist einen zweistufigen Eintrittsschlitz 17a, 17b auf mit einer ersten breiteren Stufe 17a und einer zweiten engeren Stufe 17b. An die engere Stufe 17b des Schlitzes schliesst sich nach oben ein Aufnahmeraum 17c an. Die breitere Schlitzstufe 17a ist so bemessen, dass sie wie in Fig. 2 dargestellt, den vollen Rundquerschnitt des Schwenkbügels aufnehmen und führen kann. Der Endbereich des Schwenkbügels ist, wie in Fig. 1 und 2 dargestellt und mit 84 bezeichnet, durch eine beidseitige Abfräsung abgeplattet. Dieser abgeplattete Endbereich 84 kann durch die schmälere Schlitzstufe 17b gerade passieren, wenn sich der Schwenkbügel, wie in Fig. 3 dargestellt, in der Löse-Drehstellung befindet, in welcher er entgegen der Wirkung der Schraubentorsionsfeder 60 durch Drehen am Schlüssel 54 gehalten werden kann. Wenn der Schwenkbügel 20 in das Sperrlager 17 eingetreten ist, wie in Fig. 3 dargestellt, und der Schlüssel losgelassen wird, so kann sich der Schwenkbügel in die Sperrdrehstellung verdrehen, welche in Fig. 4 dargestellt ist. In dieser Sperrdrehstellung kann der Schlüssel gezogen werden, so dass der Schwenkbügel nicht mehr verdreht werden kann. Ein Wiederaustreten des Schwenkbügels aus dem Sperrlager 17 ist dann gesperrt, weil zum einen der abgeplattete Endabschnitt 84 dann nicht mehr durch den schmäleren Schlitz 17b hindurch passieren kann und weil zum anderen der Sperrhaken 82 an einer Anlagefläche 17d des Aufnahmeraums 17c anliegt. Wie aus Fig. 2 ersichtlich, taucht der Vollquerschnitt des Schwenkbügels so weit in den Schlitz 17a ein, dass es unmöglich ist mit einem Drehwerkzeug an den abgeplatteten Abschnitt 84 heranzukommen und dadurch den Schwenkbügel unter Zerstörung des Profilschliesszylinders 42 zu verdrehen.

Die Abwandlung gemäss den Fig. 9 bis 12 entspricht teilweise der Ausführungsform nach den Fig. 1 bis 8; insoweit als Übereinstimmung besteht, sind analoge Teile mit gleichen Bezugszeichen versehen, jeweils vermehrt um die Zahl 100.

In Abwandlung von der Ausführungsform nach den Fig. 1 bis 8 entfällt in der Ausführungsform nach Fig. 9 die als Schwenkspannelement dienende Schraubenzugfeder und auch die zu dieser Schraubenzugfeder gehörigen Hilfsteile sind entfallen. Die Fig. 10 stellt eine Abwicklung der Eingriffswand 114b in Pfeilrichtung X betrachtet dar. Man erkennt in Fig. 10 wieder die Sicherungselementenaufnahme 166, die ähnlich gestaltet ist, wie in Fig. 7. Anders gestaltet worden ist jedoch das Sicherungselement 172, das als Vorsprung über den vollrunden Umriss des Schwenkbügels 120 hinaus ausgebildet ist. Entfallen sind weiterhin die Stützbahn und die Sperrelementenaufnahme. Benachbart und durch eine Spitze 188 von der Sicherungselementenaufnahme 166 getrennt ist ein Sicherungselementenanschlag 190. Die Richtung der Drehvorspannung, angedeutet durch den Pfeil 176, ist gegenüber der Ausführungsform nach Fig. 1 bis 8 umgekehrt. Die Sperrung in der Ausführungsform gemäss Fig. 9 bis 12 erfolgt allein an der Stelle des Sperrlagers 117; die Sperrstellung ist in Fig. 12 dargestellt. Um das Schwenkbügelschloss zu entsperren wird der Schwenkbügel in die Lösedrehstellung gemäss Fig. 11 gebracht, in welcher das Schwenkbügelende aus dem Sperrlager 17 austreten kann. Wenn nun der Schwenkbügel aus der ausgezogen gezeichneten Stellung in Fig. 1 in die strichpunktiert dargestellte Stellung herunterfällt, wobei ein Loslassen des Schlüssels vorausgesetzt ist, so dreht sich der Schwenkbügel 120 in die Sicherungsdrehstellung zurück, welche in Fig. 10 dargestellt ist, dieses dank der Wirkung der nach wie vor vorhandenen Schraubentorsionsfeder gemäss Fig. 6. Wenn in dieser Sicherungsdrehstellung des Schwenkbügels der Schwenkbügel sich der strichpunktiert gezeichneten Stellung gemäss Fig. 1 nähert, so stösst das Sicherungselement 172 gegen den Sicherungselementenanschlag 190 an. Die dadurch bedingte Schwenkstellung des Schwenkbügels 120 sei als Anschlagstellung definiert. In dieser Anschlagstellung kann das Sicherungselement 172 nicht in die Sicherungselementenaufnahme 166 eintreten. Dabei ist dafür Sorge getragen, dass in der Anschlagstellung der Schwenkbügel 120 noch in die Speichen des Rads 10 eingreift. Das Rad kann also in dieser Stellung des Schwenkbügels nicht gestartet werden. Um das Rad starten zu können, muss der Schwenkbügel in die in Fig. 10 gestrichelt eingezeichnete Sicherungsdrehstellung gebracht werden, welche der in Fig. 1 strichpunktiert eingezeichneten Fahrstellung entspricht. Dazu ist es notwendig, den Schwenkbügel 120 aus der in Fig. 10 mit ausgezogenen Linien gezeichneten Sicherungsdrehstellung entgegen der Wirkung der Schraubentorsionsfeder, d.h. entgegen der Richtung des Pfeils 176 zu verdrehen, solange bis das Sicherungselement 172 über die Spitze 188 hinwegtreten kann. Dann wird der Schwenkbügel 120 in die Fahrstellung gemäss Fig. 1 verschwenkt, und das Sicherungselement 172 kann in die Sicherungselementenaufnahme 166 einfallen, wie in Fig. 10 durch die gestrichelten Linien dargestellt. Dann ist der Schwenkbügel 120 in der Fahrstellung und auch gesichert. Die Sicherung kann dabei entweder wieder allein auf der Federvorspannung der Schraubentorsionsfeder gemäss Fig. 6 beruhen; es können aber auch das Sicherungselement 172 und die Sicherungselementenaufnahme 166 derart aufeinander abgestimmt sein, dass in der gestrichelt gezeichneten Stellung in Fig. 10 der Schlüssel gezogen und damit der Schwenkbügel 120 unverdrehbar gemacht werden kann.

Wie aus Fig. 1 zu ersehen, sind das Schwenklager 14 und das Sperrlager 17 unabhängig voneinander an den Gabel-Schenkeln 12a, 12b festgeschweisst oder sonstwie befestigt. Um das Anbringen des Schwenklagers und des Sperrlagers zu erleichtern ist es möglich, das Schwenklager 14 und das Sperrlager 17 bei abgenommener Schwenknabe 16 durch einen Montageverbinder miteinander zu verbinden, welcher die richtige gegenseitige Zuordnung des Schwenklagers 14 und des Sperrlagers 17 erzwingt. Dieser Montageverbinder kann darüberhinaus eine gewisse Axialverschiebung des Sperrlagers 17 gegenüber dem Schwenklager 14 in dem Masse zulassen, in dem auch der Sperrhaken 82 schmäler ist als der Aufnahmeraum 17c.

Die Montageverbindung kann ein einfaches und billiges Kunststoffteil sein, welches schon während Lagerung und Transport zusammengehörige Schwenk- und Sperrlager 14 bzw. 17 miteinander verbindet und nach deren Montage am Rahmen abgenommen und weggeworfen werden kann, so dass nachfolgend die Schwenknabe 16 mit dem Schwenkbügel 20 auf dem Schwenklager 14 montiert werden kann. Es ist ohne weiteres möglich, den Montageverbinder so auszubilden, dass er das Anschweissen von Schwenklager 14 und Sperrlager 17 oder sonstiges Befestigen nicht behindert.

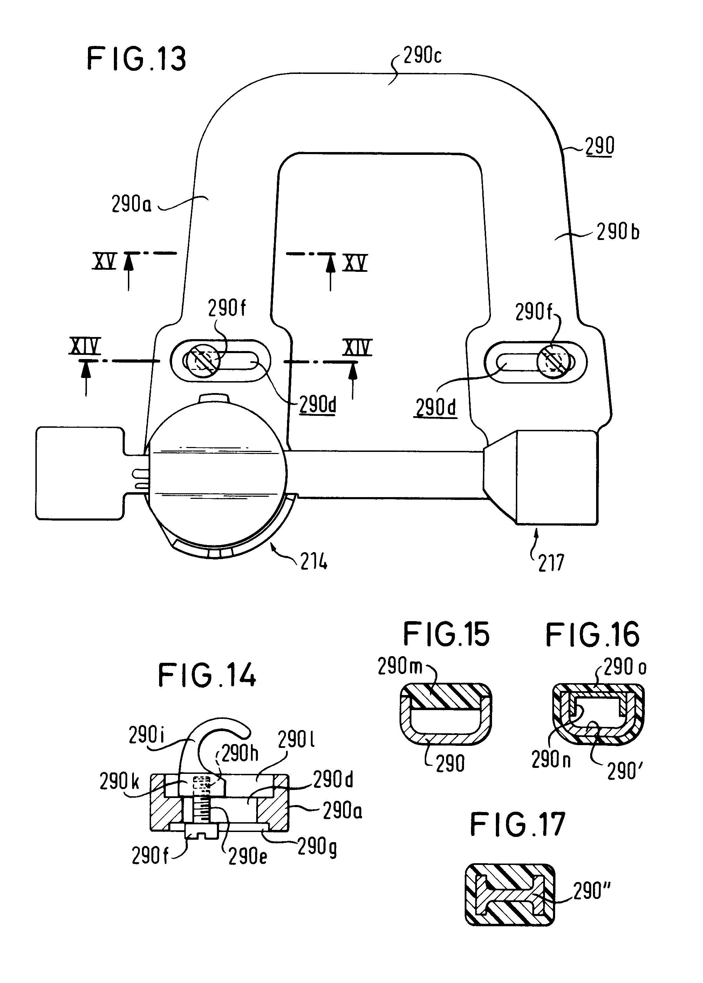

In Fig. 13 sind analoge Teile mit gleichen Bezugszeichen versehen wie in der Ausführungsform nach den Fig. 1 bis 8, jeweils vermehrt um die Zahl 200. Das Schwenklager 214 und das Sperrlager 217 sind in der Ausführungsform gemäss Fig. 13 an einem U-Bügel 290 angebracht und zwar an den Schenkeln 290a bzw. 290b des U-Bügels, welche durch einen Steg 290c miteinander verbunden sind. In den Schenkeln 290a und 290b des U-Bügels 290 sind zwei gestufte Langlöcher 290d angeordnet, welche sich parallel zu dem Steg 290c erstrecken. Die Langlöcher 290d werden von Spannschrauben 290e durchsetzt, deren Werkzeugeingriffskopf 290f in der einen Aussenstufe 290g liegt und deren Ende 290h mit einer Kralle 290i verschraubt ist. Die Kralle 290i ist mit ihrer Basis 290k in der anderen Aussenstufe 2901 des Langlochs 290d untergebracht und kann in dieser Stufe 2901 um die Achse der Schraube 290e gedreht werden, so dass die Kralle 290i den jeweiligen Schenkel einer Fahrradgabel von innen oder von aussen umfassen kann. Durch Verschieben der Schraube 290e der Langlöcher 290d ist eine Anpassung an verschiedene lichte Weiten der Radgabeln möglich, wobei eine zusätzliche Anpassungsmöglichkeit durch Drehen der Krallen 290e um die Achsen der Spannschrauben 290e gegeben ist.

Gemäss Fig. 15 ist der U-Bügel 290 mit einem U-Profil ausgeführt, wobei dieses U-Profil durch einen im Querschnitt T-förmigen U-Bügel 290m geschlossen ist.

Gemäss Fig. 16 ist der U-Bügel 290' ebenfalls im Querschnitt U-förmig und durch einen U-förmigen Füllkörper 290n geschlossen, der ebenfalls U-Querschnitt besitzt. Der ganze U-Bügel 290' ist mit einer Kunststoffschicht 290o umspritzt.

Gemäss Fig. 17 ist der U-Bügel 290" mit T-förmigem Querschnittsprofil ausgeführt und ebenfalls umspritzt.

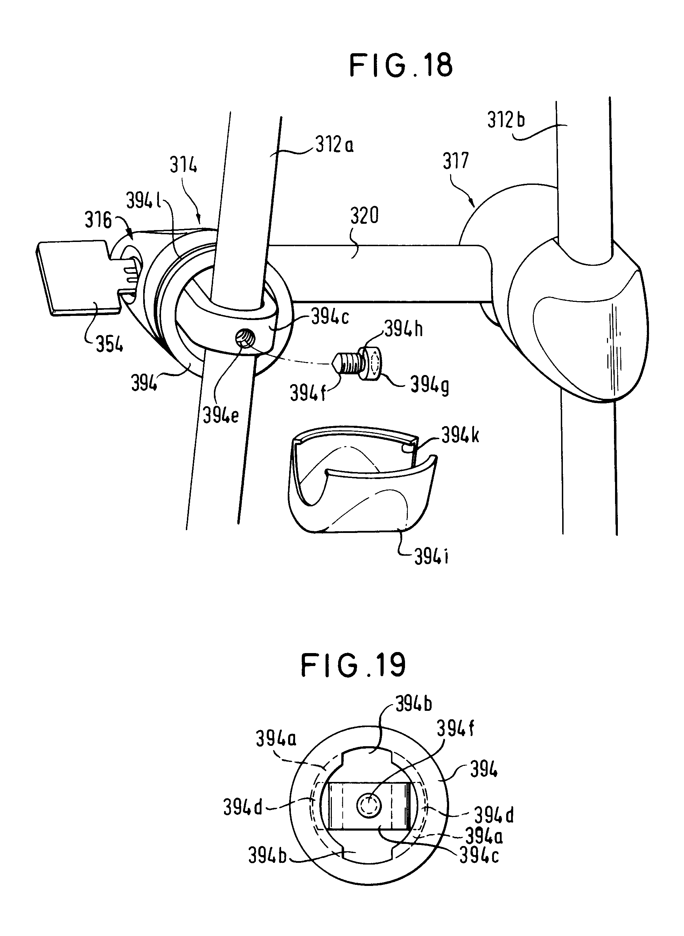

In der Ausführungsform gemäss Fig. 18 sind analoge Teile wiederum mit den gleichen Bezugszeichen versehen wie in Fig. 1, jeweils vermehrt um die Zahl 300. In dieser Ausführungsform sind das Schwenklager 314 und das Sperrlager 317 einzeln an den Gabelschenkeln 312a bzw. 312b festgeklemmt und zwar folgendermassen:

Das Schwenklager 314 ist mit einem Anlagering 394 versehen, der zur Anlage an dem Radgabelschenkel 312a bestimmt ist. In den Innenumfang des Rings 394 ist eine hinterschnittene Ringnut 394a eingelassen, welche an zwei einander diametral gegenüberliegenden Stellen von Klaueneinführungsschlitzen 394b angeschnitten ist. Der Radgabelschenkel 312a wird von einem U-förmigen Klemmbügel 394c umfasst, an dessen freien Schenkelenden Klauen 394d angebracht sind. Die Klauen 394d greifen, wie aus Fig. 19 ersichtlich, in die hinterschnittene Ringnut 394a ein. Die Montage erfolgt in der Weise, dass nach Anlegen des U-förmigen Klemmbügels 394c an dem Radgabelschenkel 312a die Klaueneinführungsschlitze 394b zur Flucht mit den Klauen 394d gebracht werden und der Ring 394 dann über die Klauen 394d hinweggeschoben wird, bis die Klauen 394d die Tiefe der hinterschnittenen Nut 394a erreicht haben. Dann kann das Schwenklager 394 in die in den Fig. 18 und 19 dargestellte Stellung verdreht werden, wobei dann die Klauen 394d in die hinterschnittene Ringnut 394a eingreifen. Nunmehr kann in eine am Steg des U-förmigen Klemmbügels 394c angebrachte Gewindebohrung 394e eine Spannschraube 394f eingeschraubt werden, welche sich gegen den Radgabelschenkel 312a anlegt und eine Verspannung der Klauen 394d mit der hinterschnittenen Ringnut 394a bewirkt. Die Spannschraube 394f weist einen Imbuskopf 394g auf, der durch einen Schwächungseinstich 394h mit dem Gewindeteil der Schraube 394f verbunden ist. Nachdem ein bestimmter Anzug erreicht ist, bricht der Imbuskopf 394g unter der Wirkung des den Anzug besorgenden Werkzeugs ab, so dass die Klemmvorrichtung nicht mehr gelöst werden kann.

Die ganze Klemmvorrichtung kann durch eine Abdeckkappe 394i abgedeckt werden, diese Abdeckkappe 394i ist ein Spritzteil aus Kunststoff und weist einen Verrastungswulst 394k auf. Dieser verrastungswulst 394k kann in eine Ringausnehmung 3941 an dem Schwenklager 314 eingerastet werden.

Das Sperrlager 317 ist in der gleichen Weise an dem anderen Radgabelschenkel 312b befestigt.

Das Schwenkbügelschloss wird mit Schwenkbügeln 320 solcher Lange geliefert, dass es ungefähr den grosstvorkommenden lichten Weiten zwischen den Radgabelschenkeln 312a und 312b entspricht. Bei Radgabeln mit geringerer lichter Weite werden das Schwenklager 314 und das Sperrlager 317 in Fig. 18 abwärts verschoben entsprechend dem nach unten divergierenden Verlauf der Radgabelschenkel 312a und 312b. Reicht die gleichmassige Verschiebung beider Lager 314 und 317 nach unten nicht aus, um den horizontalen Abstand der Lager 314 und 317 an die grössere Lange des Schwenkbügels 320 anzupassen, so kann man beispielsweise die Sperrlager 317 weiter nach unten verschieben als das Schwenklager 314, wodurch der Abstand zwischen den Lagern 314 und 317 vergrössert wird. Um das richtige Zusammenwirken der Lager 314, 317 und des Schwenkbügels 320 gleichwohl sicherzustellen, kann man die Lager 314 und 317 gegenüber den U-formigen Klemmbügeln 394c verdrehen.

## Patentansprüche

1. Schwenkbügelschloß für ein Fahrzeug, insbesondere ein Zweiradfahrzeug, mit einem Schwenkbügel (20; 120), welcher an einem Rahmenteil (12a; 112a) seitlich neben einem mit einer Durchbrechung versehenen Rad (10) um eine Schwenkachse (18) schwenkbar gelagert ist, nämlich zwischen einer Absperrstellung, in welcher er die Durchbrechung durchdringt und gegen Schwenken, gegebenenfalls durch Zusammenwirken mit einem an einem gegenüberliegenden Rahmenteil (12b) angebrachten Sperrlager (17; 117) gesperrt ist, und einer Fahrstellung, in welcher er außer Eingriff mit dem Rad (10) steht und gegen Schwenken gesichert ist, wobei der Schwenkbügel bzw. ein schwenkachsenseitiger Fortsatz (56) des Schwenkbügels (20; 120) in einer Schwenknabe (16; 116) um eine zur Schwenkachse (18) senkrechte Drehachse (22) drehbar gelagert ist und die Schwenknabe (16; 116) an einem an dem Rahmen (12) zu befestigenden, mit einer zur Schwenkachse (18) querliegenden Schwenklagerplatte (14a; 114a) ausgeführten Schwenklager (14; 114) um die Schwenkachse (18) schwenkbar gelagert ist, wobei die Schwenksicherung zumindest in der Fahrstellung durch Eingriff eines am Schwehkbügel (20; 120) vorgesehenen Sicherungselements (72; 172) in eine Sicherungselementenaufnahme (66; 166) des Schwenklagers (14; 114) gewährleistet ist und dieser Eingriff durch Drehen des Schwenkbügels (20; 120) bzw. seines Fortsatzes (56) um seine Längsachse (22) in eine bzw. aus einer Drehsicherungsstellung herstellbar bzw. lösbar ist, und wobei das Sicherungselement (72; 172) mit einer außerhalb der Schwenknabe (16; 116) angeordneten, mit der Schwenklagerplatte (14a; 114a) verbundenen Eingriffsbahn zusammenwirkt, welche die Sicherungselementenaufnahme (66; 66) aufweist bzw. bildet, dadurch gekennzeichnet, daß die Schwenknabe (16; 116) einen wenigstens annähernd kreisförmigen Umriß um die Schwenkachse (18) besitzt, daß die Drehachse (22) wenigstens annähernd diametral durch die Schwenknabe (16; 116) verläuft, daß das Sicherungselement (72; 172) unmittelbar an die Schwenknabe (16; 116) angrenzend an dem Schwenkbügel (20; 120) angebracht ist und daß die einem Teilkreis um die Schwenkachse (18) folgende Eingriffsbahn mit der Sicherungselementenaufnahme (66; 166) und gegebenenfalls einer Sperrelementenaufnahme (70) auf der Kante einer der Schwenknabe (16; 116) wenigstens auf einem Teil ihrer Umfangsfläche in einem der Lage des Sicherungselements (70; 172) entsprechenden Abstand folgenden, in Richtung der Schwenkachse (18) weisenden Seitenwand (14b; 114b) der Schwenklagerplatte (14a; 114a) ausgebildet ist.

2. Schwenkbügelschloss nach Anspruch 1; dadurch gekennzeichnet, dass der wenigstens annähernd kreisförmige Schwenknabenumriß annähernd dem Durchmesser der Schwenklagerplatte (14a; 114a) entspricht.

3. Schwenkbügelschloss nach Anspruch 1 oder 2, dadurch gekennzeichnet, dass die von der Schwenklagerplatte (14a; 114a) abgelegene Stirnfläche der Schwenknabe (16; 116) bogenförmig um die Drehachse (22) verläuft.

4. Schwenkbügelschloss nach einem der Ansprüche 1 bis 3, dadurch gekennzeichnet, dass die Schwenknabe (16; 116) auf der Schwenklagerplatte (14a; 114a) durch einen an der Schwenklagerplatte (14a; 114a) angebrachten Schwenkzapien (14c; 114c) gelagert ist, welcher in eine zentrale, sackförmige Schwenkbohrung (16a; 116a) der Schwenknabe (16; 116) eingreift.

5. Schwenkbügelschloss nach einem der Ansprüche 1 bis 4, dadurch gekennzeichnet, dass der Schwenkbügel (20; 120) bzw. sein Fortsatz (56) um die Drehachse (22) in Richtung auf die Sicherungsdrehstellung (Fig. 7) durch ein Drehvorspannelement (60) vorgespannt ist.

6. Schwenkbügelschloss nach einem der Ansprüche 1 bis 5, dadurch gekennzeichnet, dass die Sperrung der Schwenknabe (16; 116) in der Absperrstellung durch Eingriff eines durch die Schwenkbügeldrehung verstellbaren Sperrelements (72, 84, 82; 172) in eine Sperrelementenaufnahme (70, 17a, 17b; 117a, 117b) gewährleistet ist, welche an dem Schwenklager (14; 114) und/oder dem Sperrlager (17; 117) angebracht ist, welches an einem durch die Durchbrechung des Rads (10) hindurch dem Schwenklager (14; 114) gegenüberliegenden Ort angebracht ist, wobei der Schwenkbügel (20; 120) in einer dem Eingriff des Sperrelements (72, 82, 84; 172) in die Sperrelementenaufnahme (70, 17b, 17c; 117b, 117c) entsprechenden Sperrdrehstellung (Fig. 8, Fig. 4) durch eine Drehsperre (42) gesperrt ist und erst nach Lösen dieser Drehsperre (42) aus der Sperrelementenaufnahme (70, 17b, 17c; 117b, 117c) in eine Lösedrehstellung (Fig. 3 und Fig. 8 gestrichelt) drehbar ist, gegebenenfalls gegen die Wirkung des Drehvorspannelements (60).

7. Schwenkbügelschloss nach Anspruch 6, dadurch gekennzeichnet, dass die Sicherungsdrehstellung (Fig. 7) des Schwenkbügels (20; 120) der Sperrdrehstellung (Fig. 8 ausgezogen dargestellt) entspricht, und dass der Schwenkbügel (20; 120) auch in der Sicherungsdrehstellung (Fig. 7) durch die Drehsperre (42) gesperrt ist.

8. Schwenkbügelschloss nach einem der Ansprüche 6 und 7, dadurch gekennzeichnet, dass die Drehsperre von einem in der Schwenknabe (16; 116) gelagerten Schloss, insbesondere einem Schliesszylinder (42) mit zur Drehachse (22) paralleler Zylinderachse gebildet ist.

9. Schwenkbügelschloss nach Anspruch 8, dadurch gekennzeichnet, dass das, Schliesszylindergehäuse in der Schwenknabe (16; 116) aufgenommen und der Schwenkbügel (20; 120) mit dem Zylinderkern (Fortsatz 56) drehfest verbunden ist, wobei das gegebenenfalls vorhandene Drehvorspannelement (60) von einer innerhalb der Schwenknabe (16; 116) untergebrachten Schraubentorsionsteder gebildet ist, welche mit einem Ende an der Schwenknabe (16; 116) und mit dem anderen Ende an dem Zylinderkern (56) abgestützt ist.

10. Schwenkbügelschloss nach einem der Ansprüche 8 und 9, dadurch gekennzeichnet, dass der Schlüssel (54; 154) des Schliesszylinders (42) in der Sperrdrehstellung (Fig. 4) unter Sperrung des Schliesszylinders (42) abziehbar und in der Sicherungsdrehstellung (Fig. 7) entweder abziehbar oder nicht abziehbar ist.

11. Schwenkbügelschloss nach einem der Ansprüche 1 bis 10 dadurch gekennzeichnet, dass das Sicherungselement (72; 172) und gegebenenfalls ein nabenseitiges Sperrelement (72; 172) durch eine zur Drehachse tangentiale Nutausfräsung (64) in dem Schwenkbügel (20; 120) gebildet sind.

12. Schwenkbügelschloss nach einem der Ansprüche 1 bis 10, dadurch gekennzeichnet, dass das Sicherungselement (172) und gegebenenfalls ein nabenseitiges Sperrelement von einem Vorsprung des Schwenkbügels (120) gebildet sind.

13. Schwenkbügelschloss nach einem der Ansprüche 1 bis 12, dadurch gekennzeichnet, dass die Schwenknabe (16; 116) durch ein Schwenkspannelement (24) in Richtung auf eine Schwenkendstellung (in Fig. 1 strichpunktiert eingezeichnet) gespannt ist.

14. Schwenkbügelschloss nach Anspruch 13, dadurch gekennzeichnet, dass die Schwenknabe (16; 116) in Richtung auf die Fahrstellung (in Fig. 1 strichpunktiert eingezeichnet) gespannt ist.

15. Schwenkbügelschloss nach Anspruch 13 oder 14, dadurch gekennzeichnet, dass das Schwenkspannelement (24) zwischen der Schwenklagerplatte (14a) und der Schwenknabe (16) verdeckt untergebracht ist.

16. Schwenkbügelschloss nach Anspruch 15, dadurch gekennzeichnet, dass das Schwenkspannelement (24) von einer in einem bogenförmigen Kanal (16c) um die Schwenkachse (18) aufgenommenen Spannfeder, insbesondere Schraubenzugleder (24), gebildet ist, welche einenends an der Schwenklagerplatte (14a) und anderenends an der Schwenknabe (16) angreift.

17. Schwenkbügelschloss nach Anspruch 16, dadurch gekennzeichnet, dass der bogenförmige Kanal (16c) die Schwenkbohrung (16a) umgibt und bevorzugt von einem Ringfortsatz (16b) der Schwenknabe (16) begrenzt ist.

18. Schwenkbügelschloss nach einem der Ansprüche 13 bis 17, dadurch gekennzeichnet, dass das Schwenkspannelement (24) unter Vorspannung zwischen die Schwenklagerplatte (14a) und die Schwenknabe (16) eingebaut ist.

19. Schwenkbügelschloss nach Anspruch 18, dadurch gekennzeichnet, dass das Schwenkspannelement (24) mit einem Ende an einem losen Verankerungsteil (32) angreift, welches zusammen mit dem Schwenkspannelement (24) an der Schwenknabe (16) oder dem Schwenklager (14) vormontierbar ist und bei Zusammenbau der Schwenknabe (16) und des Schwenklagers (14) nach Erteilung einer Vorspannung formschlüssig in Eingriff mit dem Schwenklager (14) bzw. der Schwenknabe (16) tritt.

20. Schwenkbügelschloss nach einem der Ansprüche 1 bis 19, dadurch gekennzeichnet, dass der Schwenkbügel (20) nach Verdrehen aus der Sperrdrehstellung (Fig. 8 ausgezogen gezeichnet) in die Lösedrehstellung (Fig. 8 gestrichelt gezeichnet) und Ausschwenken der Schwenknabe (16) aus der Absperrstellung (Fig. 1 ausgezogen gezeichnet) auf dem folgenden Schwenkweg bis zur Fahrstellung (Fig. 1 strichpunktiert gezeichnet) durch eine der Sicherungselementenaufnahme (66) vorausgehende, einen Teil der Eingriffsbahn bildende Stützbahn (68) von annähernd stetigem Verlauf gegen die Wirkung des Drehvorspannelements (60) in Lösedrehstellung (Fig. 8 gestrichelt gezeichnet) gehalten ist, derart, dass er erst bei Erreichen der Fahrstellung (Fig. 1 strichpunktiert gezeichnet) in die Sicherungsdrehstellung (Fig. 7) springt unter gleichzeitigem Eintritt des Sicherungselements (72) in die Sicherungselementenaufnahme (66), wobei der Eingriff des Sicherungselements (72) in die Sicherungselementenaufnahme (66) unter der Wirkung des Drehvorspannelements (60) die Annäherung des Schwenkbügels (20) an die Fahrstellung (Fig. 1 strichpunktiert eingezeichnet) gegebenenfalls noch unterstützt.

21. Schwenkbügelschloss nach einem der Ansprüche 1 bis 19, dadurch gekennzeichnet, dass der Schwenkbügel (120) nach Lösung des Sperrelements (182, 184) aus der Sperrelementenaufnahme (117b, 117c) während des Schwenkwegs der Schwenknabe (116) von der Absperrstellung (Fig. 1 ausgezogen eingezeichnet) in die Fahrstellung (Fig. 1 strichpunktiert engezeichnet) durch das Drehvorspannelement (60) in die Sicherungsdrehstellung (Fig. 10) zurückstellbar ist, und dass an dem Schwenklager (114) ein Sicherungselementenanschlag (190) angebracht ist, gegen welchen das Sicherungselement (172) auf dem Schwenkweg des Schwenkbügels (120) vor Erreichen der Fahrstellung (Fig. 1 strichpunktiert eingezeichnet) in einer Anschlagstellung anschlägt, in welcher der Schwenkbügel (120) noch in die Durchbrechung des Rads eingreift.

22. Schwenkbügelschloss nach Anspruch 21, dadurch gekennzeichnet, dass der Sicherungselementenanschlag (190) an der Schwenklagerplatte (114a), insbesondere an deren Seitenwand (114b) ausgebildet ist.

23. Schwenkbügelschloss nach einem der Anspruche 21 und 22, dadurch gekennzeichnet, dass auf dem Schwenkweg des Schwenkbügels (120) zwischen der Anschlagstellung und der Fahrstellung eine weitere stabile Stellung nicht möglich ist, indem das Sicherungselement (172) durch Eingriff mit der Sicherungselementenaufnahme (166) oder dem Sicherungselementenanschlag (190) unter der Wirkung des Drehvorspannelements (160) den Schwenkbügel (120) aus jeder Zwischenstellung entweder in die Fahrstellung (Fig. 1 strichpunktiert eingezeichnet) oder in die Anschlagstellung zu verschwenken sucht, in der er in das Rad eingreift.

24. Schwenkbügelschloss nach einem der Ansprüche 1 bis 23, dadurch gekennzeichnet, dass der Eintrittsschlitz (17a, 17b; 117a, 117b) des Sperrlagers (17; 117), in Richtung des in Absperrstellung (Fig. 1 ausgezogen eingezeichnet) befindlichen Sperrbügels (20; 120) gesehen, zweistutig ist mit einer ersten der Schwenknabe (16; 116) näheren und weiteren Schlitzstufe (17a; 117a), welche den vollen Bügelquerschnitt aufnimmt, und mit einer daran anschliessenden schwenklagerferneren zweiten Schlitzstufe (17b; 117b), welche nur dem abgeflachten, den Sperrhaken (82; 182) tragenden Schwenkbügelende (84; 184) Durchtritt gewahrt.

25. Schwenkbügelschoss nach einem der Anspruche 1 bis 24, gekennzeichnet durch einen das Schwenklager (14; 114) mit dem Sperrlager (17; 117) verbindenden Montageverbinder, welcher die beiden Lager (14, 17; 114, 117) gegebenenfalls verschieblich in der ihrer Betriebszuordnung entsprechenden relativen Lage hält.

26. Schwenkbügelschloss nach einem der Ansprüche 1 bis 24, dadurch gekennzeichnet, dass das Schwenklager (214) und das Sperrlager (217) in an sich bekannter Weise an einem U-Bügel zur Befestigung an einer Radgabel angeordnet sind, derart, dass der U-Bügel die Radfelge umgreift und mit seinen U-Schenken (290a, 290b) im wesentlichen zur Radachse hin gerichtet ist.

27. Schwenkbügelschloss nach Anspruch 26, dadurch gekennzeichnet, dass der U-Bügel (290) in an sich bekannter Weise zur lösbaren Befestigung an der Radgabel ausgebildet ist.

28. Schwenkbügelschloss nach einem der Ansprüche 26 und 27, dadurch gekennzeichnet, dass das Schwenklager (214) und/oder das Sperrlager (217) einstückig mit dem U-Bügel (290) hergestellt sind, z.B. aus Temperguss.

29. Schwenkbügelschloss nach einem der Ansprüche 26 bis 28, dadurch gekennzeichnet, dass der U-Bugel (290) und gegebenenfalls Teile des Schwenklagers (214) und/oder des Sperrlagers (217) mit Kunststoff umspritzt sind.

30. Schwenkbügelschloss nach einem der Ansprüche 26 bis 29 dadurch gekennzeichnet, dass der U-Bugel (290; 290'; 290") einen U-förmigen oder Doppel-T-förmigen Hohlquerschnitt besitzt und dass der Hohlquerschnitt durch ein entsprechendes Füllstück wenigstens teilweise gefüllt ist.

31. Schwenkbügelschloss nach einem der Ansprüche 1 bis 30, dadurch gekennzeichnet, dass eine Klemmvorrichtung einen U-förmigen Klemmbügel (394c) umfasst, welcher an seinen freien Schenkelenden Klauen (394d) zum Einhaken in Hinterschneidungen (394a) an dem Schwenklager (314) bzw. Sperrlager (317) aufweist, und dass im Scheitel des U-förmigen Klemmbügels (394c) eine Gewindebohrung (394e) für die Aufnahme einer Spannschraube (394f) vorgesehen ist, welche gegen den jeweiligen Radgabelschenkel (312a) andrückbar ist, derart, dass die Klauen (394d) mit den Hinterschneidungen (394a) verspannt werden.

32. Schwenkbügelschloss nach Anspruch 31, dadurch gekennzeichnet, dass das Schwenklager (314) bzw. Sperrlager (317) einen dem jeweiligen Gabelschenkel (312a bzw. 312b) zugewendeten Anlagering (394) zur Anlage an den jeweiligen Gabelschenkel aufweist und dass dieser Anlagering (394) an seiner Innenseite eine ringsumlaufende Hinterschneidung (394a) mit diametral einander gegenüberliegenden Klaueneinführungsschlitzen (394b) aufweist, derart, dass die Klauen (394d) im Bereich der Klaueneinführungsschlitze (394b) bis auf die Tiefe der Hinterschneidung (394a) in den Anlagering (394) einführbar sind und das Schwenklager (314) bzw. Sperrlager (317) hierauf gegenüber dem U-förmigen Klemmbügel (394c) verdrehbar ist, wobei die Klauen (394d) in die Hinterschneidungen (394a) eingreifen und wobei vorzugsweise ein Werkzeugeingriffsteil (394g) einer Spannschraube (394f) der Klemmvorrichtung abbrechbar ist, etwa durch das beim Spannen auftretende Drehmoment.

33. Schwenkbügelschloss nach Anspruch 31 oder 32, dadurch gekennzeichnet, dass zur Anpassung des Schwenkbügelschlosses an unterschiedliche Radgabelweiten das Schwenklager (314) und das Sperrlager (317) in unterschiedlichem Abstand zur Radachse feststellbar sind und zumindest eines dieser Lager in der Ebene der Radgabel in unterschiedlichen Winkelpositionen feststellbar ist, derart, dass der Schwenkbügel (320) in der Absperrstellung mit dem Sperrlager (317) fluchtet.

34. Schwenkbügelschloss nach einem der Ansprüche 31 bis 33, dadurch gekennzeichnet, dass die Klemmvorrichtung durch eine auf das Schwenklager (314) bzw. Sperrlager (317) aufrastbare Abdeckkappe (394i) abdeckbar ist.

35. Schwenkbügelschloß für ein Fahrzeug, insbesondere ein Zweiradfahrzeug, mit einem Schwenkbügel (120), welcher an einem Rahmenteil (112a) seitlich neben einem mit einer Durchbrechung versehenen Rad (10) um eine Schwenkachse (18) schwenkbar gelagert ist, nämlich zwischen einer Absperrstellung, in welcher er die Durchbrechung durchdringt und gegen Schwenken, gegebenenfalls durch Zusammenwirken mit einem an einem gegenüberliegenden Rahmenteil angebrachten Sperrlager (117) gesperrt ist, und einer Fahrstellung, in welcher er außer Eingriff mit dem Rad (10) steht und gegen Schwenken gesichert ist, wobei der Schwenkbügel bzw. ein schwenkachsenseitiger Fortsatz (56) des Schwenkbügels (120) in einer Schwenknabe (116) um eine zur Schwenkachse (18) senkrechte Drehachse (22) drehbar gelagert ist und die Schwenknabe (116) an einem an dem Rahmen (12) zu befestigenden, mit einer zur Schwenkachse (18) querliegenden Schwenklagerplatte (114a) ausgeführten Schwenklager (114) um die Schwenkachse (18) schwenkbar gelagert ist, und wobei die Schwenksicherung zumindest in der Fahrstellung durch Eingriff eines am Schwenkbügel (120) vorgesehenen Sicherungselements (172) in eine Sicherungselementenaufnahme (166) des Schwenklagers (114) gewährleistet ist und dieser Eingriff durch Drehen des Schwenkbügels (120) bzw. seines Fortsatzes (56) um seine Längsachse (22) in eine bzw. aus einer Drehsicherungsstellung herstellbar bzw. lösbar ist, wobei das Sicherungselement (172) mit einer außerhalb der Schwenknabe (116) angeordneten mit der Schwenklagerplatte (14a; 114a) verbundenen Eingriffsbahn zusammenwirkt, welche die Sicherungselementenaufnahme (66; 166) aufweist bzw. bildet, wobei der Schwenkbügel (120) nach Lösung eines Sperrelements (182, 184) aus einer Sperrelementenaufnahme (117b, 117c) während des Schwenkwegs der Schwenknabe (116) von der Absperrstellung (Fig. 1 ausgezogen eingezeichnet) in die Fahrstellung (Fig. 1 strichpunktiert eingezeichnet) durch ein Drehvorspannelement (60) in die Sicherungsdrehstellung (Fig. 10) zurückstellbar ist, und wobei an dem Schwenklager (114) ein Sicherungselementenanschlag (190) angebracht ist, gegen welchen das Sicherungselement (172) auf dem Schwenkweg des Schwenkbügels (120) vor Erreichen der Fahrstellung (Fig. 1 strichpunktiert eingezeichnet) in einer Anschlagstellung anschlägt, dadurch gekennzeichnet, daß das Sicherungselement (172) im Nabenbereich angeordnet ist und seine Eingriffsbahn in Richtung der Schwenkachse (18) weist und einem Teilkreis um diese folgt und daß der Sicherungselementenanschlag (190) an der Eingriffsbahn ausgebildet ist, derart, daß der Schwenkbügel (120) in der Anschlagstellung noch in die Durchbrechung des Rads eingreift.

36. Schwenkbügelschloß nach Anspruch 35 zusätzlich gekennzeichnet durch die Merkmale nach einem der Ansprüche 2 bis 4,6-19 und 22 bis 34.

## Claims

1. Pivoting lever lock for a vehicle, in particular a two-wheel vehicle, with a pivoting lever (20; 120) which is pivotably mounted about a pivoting axis (18) on a frame part (12a; 112a) on the side next to a wheel (10) provided with an opening, i.e. between a locked position, in which it penetrates the opening and is locked so as to be unable to pivot, if necessary by means of cooperation with a lock bearing (17; 117) mounted on an opposite frame part (12b), and a travel position, in which it is disengaged from the wheel (10) and is secured so as to be unable to pivot, the pivoting lever or an extension (56) of the pivoting lever (20; 120) arranged on the pivoting axis side being rotatably mounted in a pivoting boss (16; 116) about an axis of rotation (22) perpendicular to the pivoting axis (18) and the pivoting boss (16; 116) being pivotably mounted about the pivoting axis (18) on a pivot bearing (14; 114) which is to be secured to the frame (12) and which is designed so as to have a pivot bearing plate (14a; 114a) lying transverse to the pivoting axis (18), and securing against pivoting being ensured at least in the travel position by means of engagement of a securing member (72; 172) provided on the pivoting lever (20; 120) in a recess (66; 166) in the pivot bearing (14; 114) for receiving the securing member, it being possible for this engagement to be established or released by rotating the pivoting lever (20; 120) or its extension (56) about its longitudinal axis (22) into or out of a rotationally secured position, and the securing member (72; 172) cooperating with an engagement path which is arranged outside the pivoting boss (16; 116) and is connected to the pivot bearing plate (14a; 114a), which engagement path has or forms the recess (66; 166) for receiving the securing member, characterized in that the pivoting boss (16; 116) has an at least approximately circular contour about the pivoting axis (18), in that the axis of rotation (22) extends at least approximately diametrically through the pivoting boss (16; 116), in that the securing member (72; 172) is fixed directly onto the pivoting boss (16; 116), adjacent to the pivoting lever (20; 120) and in that the engagement path which follows a partial circle about the pivoting axis (18) is designed with the recess (66; 166) for receiving the securing member and optionally a recess (70) for receiving the locking member on the edge of a side wall (14b; 114b) of the pivot bearing plate (14a; 114a), the side wall following the pivoting boss (16; 116), at least over part of its circumferential surface, at a distance which corresponds to the position of the securing member (70; 172) and pointing in the direction of the pivoting axis (18).

2. Pivoting lever lock according to Claim 1, characterized in that the at least approximately circular pivoting boss contour corresponds approximately to the diameter of the pivot bearing plate (14a; 114a).

3. Pivoting lever lock according to Claim 1 or 2, characterized in that the face of the pivoting boss (16; 116) located away from the pivot bearing plate (14a; 114a) extends in the manner of an arc about the axis of rotation (22).

4. Pivoting lever lock according to one of Claims 1 to 3, characterized in that the pivoting boss (16; 116) is mounted on the pivot bearing plate (14a; 114a) by means of a pivot pin (14c; 114c) which is fixed to the pivot bearing plate (14a; 114a) and engages in a central blind-type pivot bore (16a; 116a) in the pivoting boss (16; 116).

5. Pivoting lever lock according to one of Claims 1 to 4, characterized in that the pivoting lever (20; 120) or its extension (56) is pre-tensioned about the axis of rotation (22) towards the secured rotational position (Fig. 7) by means of a rotational pre-tensioning member (60).

6. Pivoting lever lock according to one of Claims 1 to 5, characterized in that locking of the pivoting boss (16; 116) in the locked position is ensured by means of engagement of a locking member (72, 84, 82; 172) which can be adjusted by rotating the pivoting lever, in a recess (70, 17a, 17b; 117a, 117b) for receiving the locking member, which recess is provided in the pivot bearing (14; 114) and/or the lock bearing (17; 117) which is arranged at a location lying opposite the pivot bearing (14; 114) through the opening in the wheel (10), the pivoting lever (20; 120) being locked in a locked rotational position (Fig. 8, Fig. 4) corresponding to the engagement of the locking member (72, 82, 84; 172) in the recess (70, 17b, 17c; 117b, 117c) for receiving the locking member by means of a rotational locking device (42) and can be rotated, if necessary against the action of the rotational pre-tensioning member (60), only after this rotational locking device (42) has been released, away from the recess (70, 17b, 17c; 117b, 117c) for receiving the locking member into a released rotational position (shown in dotted lines in Fig. 3 and Fig. 8).

7. Pivoting lever lock according to Claim 6, characterized in that the secured rotational position (Fig. 7) of the pivoting lever (20; 120) corresponds to the locked rotational position (shown in continuous lines in Fig. 8) and in that the pivoting lever (20; 120) is also locked in the secured rotational position (Fig. 7) by means of the rotational locking device (42).

8. Pivoting lever lock according to either of Claims 6 and 7, characterized in that the rotational locking device consists of a lock mounted inside the pivoting boss (16; 116), in particular a locking cylinder (42) with its cylinder axis parallel to the axis of rotation (22).

9. Pivoting lever lock according to Claim 8, characterized in that the locking cylinder housing is accommodated inside the pivoting boss (16; 116) and the pivoting lever (20; 120) is locked in rotation with the cylinder core (extension 56), the optionally present rotational pre-tensioning member (60) consisting of a screw torsion spring which is accommodated inside the pivoting boss (16; 116) and one end of which rests against the pivoting boss (16; 116), while the other end rests against the cylinder core (56).

10. Pivoting lever lock according to either of Claims 8 and 9, characterized in that the key (54; 154) of the locking cylinder (42) may be removed in the locked rotational position (Fig. 4) locking the locking cylinder (42) and may or may not be removed in the secured rotational position (Fig. 7).

11. Pivoting lever lock according to one of Claims 1 to 10, characterized in that the securing member (72; 172) and, if appropriate, a locking member (72; 172) located on the boss side are formed by a milled-out groove (64) provided in the pivoting lever (20; 120) and located tangential to the axis of rotation.

12. Pivoting lever lock according to one of Claims 1 to 10, characterized in that the securing member (172) and, if appropriate, a locking member located on the boss side are formed by a projection on the pivoting lever (120).

13. Pivoting lever lock according to one of Claims 1 to 12, characterized in that the pivoting boss (16; 116) is tensioned by means of a pivot teniioning device (24) in the direction of a pivoting end position (shown in dot-dash lines in Fig. 1).

14. Pivoting lever lock according to Claim 13, characterized in that the pivoting boss (16; 116) is tensioned in the direction of the travel position (shown in dot-dash lines in Fig. 1).

15. Pivoting lever lock according to Claim 13 or 14, characterized in that the pivot tensioning device (24) is accommodated so as to be concealed between the pivot bearing plate (14a) and the pivoting boss (16).

16. Pivoting lever lock according to Claim 15, characterized in that the pivot tensioning device (24) consists of a tension spring, in particular a screw tension spring (24) which is received in an arc-shaped channel (16c) about the pivoting axis (18) and which is attached at one end to the pivot bearing plate (14a) and at the other end to the pivoting boss (16).

17. Pivoting lever look according to Claim 16, characterized in that the arc-shaped channel (16c) surrounds the pivoting bore (16a) and is preferably confined by an annular extension (16b) of the pivoting boss (16).

18. Pivoting lever lock according to one of Claims 13 to 17, characterized in that the pivot tensioning device (24) is mounted so as to be pre-tensioned, between the pivot bearing plate (14a) and the pivoting boss (16).

19. Pivoting lever lock according to Claim 18, characterized in that one end of the pivot tensioning device (24) is attached to a movable fixing part (32) which can be pre-assembled together with the pivot tensioning device (24) on the pivoting boss (16) or the pivot bearing (14) and which, when the pivoting boss (16) and the pivot bearing (14) are assembled, after being pre-tensioned engages positively with the pivot bearing (14) or the pivoting boss (16).

20. Pivoting lever lock according to one of Claims 1 to 19, characterized in that the pivoting lever (20), after twisting out of the locked rotational position (shown in continuous lines in Fig. 8) into the released rotational position (shown in broken lines in Fig. 8) and pivoting of the pivoting boss (16) out of the locked position (shown in continuous lines in Fig. 1) along the following pivoting path to the travel position (shown in dot-dash lines in Fig. 1), is held in the released rotational position (shown in broken lines in Fig. 8) against the action of the rotational pre-tensioning member (60) by means of a support path (68) which extends approximately continuously and which precedes the recess (66) for receiving the securing member and forms part of the engagement path, in such a way that it clicks into the secured rotational position (Fig. 7) only when the travel position is reached (shown in dot-dash lines in Fig. 1), at the same time as the securing member (72) enters into the recess (66) for receiving the securing member, entry of the securing member (72) into the recess (66) for receiving the securing member further aiding, if necessary, under the action of the rotational pre-tensioning member (60), the approach of the pivoting lever (20) into the travel position (shown in dot-dash lines in Fig. 1).

21. Pivoting lever lock according to one of Claims 1 to 19, characterized in that the pivoting lever (120), after the locking member (182, 184) has been disengaged from the recess (117b, 117c) for receiving the locking member, during the pivoting movement of the pivoting boss (116) from the locked position (shown in continuous lines in Fig. 1) into the travel position (shown in dot-dash lines in Fig. 1), can be reset into the secured rotational position (Fig. 10) by means of the rotational pre-tensioning member (60), and in that a stop (190) for the securing member is provided on the pivot bearing (114), against which the securing member (172) comes to rest in a stop position, during the pivoting travel of the pivoting lever (120) before reaching the travel position (shown in dot-dash lines in Fig. 1), in which rest position the pivoting lever (120) still engages into the opening in the wheel.

22. Pivoting lever lock according to Claim 21, characterized in that the stop (190) for the securing member is formed on the pivot bearing plate (114a), in particular on its side wall (114b).

23. Pivoting lever lock according to either of Claims 21 and 22, characterized in that a further stable position is not possible on the pivoting path of the pivoting lever (120) between the stop position and the travel position, since the securing member (172) by means of engagement in the recess (166) for receiving the securing member or with the stop (190) for the securing member, under the action of the rotational pre-tensioning member (160), tries to pivot the pivoting lever (120) out from any intermediate position either into the travel position (shown in dot-dash lines in Fig. 1) or into the stop position where it is engaged in the wheel.

24. Pivoting lever lock according to one of Claims 1 to 23, characterized in that the entry slot (17a, 17b; 117a, 117b) of the lock bearing (17; 117), viewed in the direction of the looking lever (20; 120) located in the looked position (shown in continuous lines in Fig. 1), is two- stepped, with a first slot step (17a; 117a) which is closer to the pivoting boss (16; 116) and broader and which receives the full cross-section of the lever, and with a second slot step (17b; 117b) which is adjacent thereto and further from the pivot bearing and which allows only the flat end (84; 184) of the pivoting lever with the locking hook (82; 182) to pass through.

25. Pivoting lever lock according to one of Claims 1 to 24, characterized by an assembly connecting piece which connects the pivot bearing (14; 114) to the lock bearing (17; 117) and which holds both bearings (14, 17; 114, 117), if necessary in a displaceable manner in the relative position corresponding to the operational functions assigned to them.

26. Pivoting lever lock according to one of Claims 1 to 24, characterized in that the pivot bearing (214) and the lock bearing (217) are arranged in a manner known per se on a stirrup to be fixed to a set of wheel forks, in such a way that the stirrup embraces the wheel rim and with its arms (290a, 290b) is directed substantially towards the wheel axis.

27. Pivoting lever lock according to Claim 26, characterized in that the stirrup (290) is designed in a manner known per se for removable attachment to the wheel forks.

28. Pivoting lever lock according to either of Claims 26 and 27, characterized in that the pivot bearing (214) and/or the lock bearing (217) are formed as a single piece with the stirrup (290) and are made, for example, from malleable cast iron.

29. Pivoting lever lock according to one of Claims 26 to 28, characterized in that the stirrup (290) and, if applicable, parts of the pivot bearing (214) and/or of the lock bearing (217) are extrusion-coated with plastic.

30. Pivoting lever lock according to one of Claims 26 to 29, characterized in that the stirrup (290; 290', 290") has a U-shaped or double-T-shaped hollow section and in that the hollow section is filled at least partly by a corresponding filling piece.

31. Pivoting lever lock according to one of Claims 1 to 30, characterized in that a clamping device comprises a U-shaped clamping stirrup (394c) which has, at its free arm ends, claws (394d) for hooking into rear recesses (394a) in the pivot bearing (314) or lock bearing (317), and in that a threaded bore (394e) is provided in the top of the U-shaped clamping stirrup (394c) for receiving a clamping screw (394f) which can be pressed against the respective wheel fork arm (312a), in such a way that the claws (394d) are secured in the rear recesses (394a).

32. Pivoting lever look according to Claim 31, characterized in that the pivot bearing (314) or lock bearing (317) has a pressure ring (394) facing the respective fork arm (312a or 312b) and intended to apply pressure against the respective fork arm and in that this pressure ring (394) has an annular rear recess (394a) on its inner side with claw insertion slots (394b) lying diametrically opposite each other, in such a way that the claws (394d) can be inserted into the pressure ring (394) in the region of the claw insertion slots (394b) down as far as the rear recess (394a) and the pivot bearing (314) or lock bearing (317) can be twisted hereupon opposite the U-shaped clamping stirrup (394c), the claws (394d) engaging in the rear recesses (394a) and it being possible preferably for a tool engaging part (394g) of a clamping screw (394f) of the clamping device to be broken off, for example, by means of the torque occurring during clamping.

33. Pivoting lever lock according to Claim 31 or 32, characterized in that, in order to adapt the pivoting lever lock to different wheel fork widths, the pivot bearing (314) and the lock bearing (317) can be secured at different distances from the wheel axis and at least one of these bearings can be secured in the plane of the wheel fork in different angular positions, in such a way that the pivoting lever (320), when in the locked position, is aligned with the lock bearing (317).

34. Pivoting lever lock according to one of Claims 31 to 33, characterized in that the clamping device can be covered by a covering cap (394i) which can be fitted onto the pivot bearing (314) or lock bearing (317).

35. Pivoting lever lock for a vehicle, in particular a two-wheel vehicle, with a pivoting lever (120) which is pivotably mounted about a pivoting axis (18) on a frame part (112a) on the side next to a wheel (10) provided with an opening, i.e. between a locked position, in which it penetrates the opening and is locked so as to be unable to pivot, if necessary by means of cooperation with a lock bearing (117) mounted on an opposite frame part (12b), and a travel position, in which it is disengaged from the wheel (10) and is secured so as to be unable to pivot, the pivoting lever or an extension (56) of the pivoting lever (120) arranged on the pivoting axis side being rotatably mounted in a pivoting boss (116) about an axis of rotation (22) perpendicular to the pivoting axis (18) and the pivoting boss (116) being pivotably mounted about the pivoting axis (18) on a pivot bearing (114) which is to be secured to the frame (12) and which is designed so as to have a pivot bearing plate (114a) lying transverse to the pivoting axis (18), and securing against pivoting being ensured at least in the travel position by means of engagement of a securing member (172) provided on the pivoting lever (120) in a recess (166) in the pivot bearing (114) for receiving the securing member, it being possible for this engagement to be established or released by rotating the pivoting lever (120) or its extension (56) about its longitudinal axis (22) into or out of a rotationally secured position, and the securing member (172) cooperating with an engagement path which is arranged outside the pivoting boss (116) and is connected to the pivot bearing plate (114a), which engagement path has or forms the recess (166) for receiving the securing member, the pivoting lever (120), after a locking member (182, 184) has been disengaged from a recess (117b, 117c) for receiving the locking member, during the pivoting movement of the pivoting boss (116) from the locked position (shown in continuous lines in Fig. 1) into the travel position (shown in dot-dash lines in Fig. 1) being resettable into the secured rotational position (Fig. 10) by means of a rotational pre-tensioning member (60), and a stop (190) for the securing member being provided on the pivot bearing (114), against which the securing member (172) comes to rest in a stop position, during the pivoting travel of the pivoting lever (120) before reaching the travel position (shown in dot-dash lines in Fig. 1), characterized in that the securing member (172) is arranged in the region of the boss and its engagement path points in the direction of the pivoting axis (18) and follows a partial circle about the latter, and in that the stop (190) for the securing member is designed in such a manner on the engagement path that the pivoting lever (120) still engages in the opening in the wheel in the stop position.

36. Pivoting lever lock according to Claim 35, additionally characterized by the features according to one of Claims 2 to 4, 6 to 19 and 22 to 34.

## Revendications

1. Serrure à partie pivotante pour un véhicule, en particulier une bicyclettte, comprenant une partie pivotante (20; 120) qui est montée de façon pivotante autour d'un axe de pivotement (18) sur une partie de cadre (12a; 112a) latéralement contre une roue (10) munie d'un passage, à savoir entre une position fermée dans laquelle elle traverse le passage et ne peut pivoter, éventuellement en coopérant avec un palier de fermeture (17; 117) monté sur une partie de cadre (12b) disposée à l'opposé, et une position de marche dans laquelle elle est dégagée de la roue (10) et ne peut pivoter, la partie pivotante ou un prolongement (56) de la partie pivotante (20; 120) qui est situé du côté de l'axe de pivotement étant monté à rotation dans un moyeu (16; 116) autour d'un axe (22) perpendiculaire à l'axe de pivotement (18), et le moyeu de pivotement (16; 116) étant monté de façon pivotante autour de l'axe de pivotement (18) dans un palier de pivotement (14; 114) à fixer du cadre (12), constitué par une plaque de palier de pivotement (14a; 114a) disposée transversalement à l'axe de pivotement (18), et le blocage du mouvement de pivotement étant assuré, au moins en position de marche, par l'introduction d'un élément de blocage (72; 172) prévu sur la partie pivotante (20; 120) dans la région du moyeu dans un évidement pour l'élément de blocage (66; 166) du palier de pivotement (14; 114) et cette introduction pouvant être réalisée ou dégagée par rotation de la partie pivotante (20; 120) ou de son prolongement (56) autour de son axe longitudinal (22) dans ou hors d'une position bloquée en rotation, l'élément de blocage (72; 172) coopérant avec une piste de contact disposée à l'extérieur du moyeu de pivotement (16; 116) et liée à la plaque de palier de pivotement (14a; 114a), piste qui comporte ou forme l'évidement pour l'élément de blocage (66; 166), caractérisée en ce que le moyeu de pivotement (16; 116) présente un pourtour au moins approximativement de forme circulaire, autour de l'axe de pivotement (18), en ce que l'axe de rotation (22) passe au moins approximativement diamétralement au travers du moyeu de pivotement (16; 116), en ce que l'élément de blocagc (72; 172) est disposé sur la partie pivotante (20; 120) directement adjacent au moyeu de pivotement (16; 116) et en ce que la piste de contact, disposée suivant un secteur de cercle autour de l'axe de pivotement (18), de même que l'évidement pour l'élément de blocage (66; 166) et éventuellement un évidement (70) pour l'élément de fermeture, est formé sur le bord d'une paroi latérale (14b; 114b) de la plaque de palier de pivotement (14a; 114a), paroi latérale qui s'étend dans la direction de l'axe de pivotement (18) et qui, sur au moins une partie de sa circonférence, suit le moyeu de pivotement (16; 116) à une distance correspondant à la position de l'élément de blocage (72; 172).

2. Serrure à partie pivotante selon la revendication 1, caractérisée en ce que le pourtour du moyeu de pivotement (16; 116), au moins approximativement de forme circulaire, correspond au moins approximativement au diamètre de la plaque de palier de pivotement (14a; 114a).

3. Serrure à partie pivotante selon la revendication 1 ou 2, caractérisée en ce que la face frontale du moyeu de pivotement (16; 116) qui est à l'opposé de la plaque de palier de pivotement (14a; 114a) a une forme courbe autour de l'axe de rotation (22).

4. Serrure à partie pivotante selon l'une quelconque des revendications 1 à 3, caractérisée en ce que le moyeu de pivotement (16; 116) est monté sur la plaque de palier de pivotement (14a ; 114a) par un tourillon de pivotement (14c; 114c) monté sur la plaque de palier de pivotement (14a; 114a), qui pénètre dans un alésage de pivotement central et borgne (16a; 116a) du moyeu de pivotement (16; 116).

5. Serrure à partie pivotante selon l'une quelconque des revendications 1 à 4, caractérisée en ce que la partie pivotante (20; 120) ou son prolongement (56) est soumise à une précontrainte autour de l'axe de rotation (22) en direction de la position de sécurité de rotation (figure 7) par un élément de précontrainte en rotation (60).

6. Serrure à partie pivotante selon l'une quelconque des revendications 1 à 5, caractérisée en ce que le blocage du moyeu de pivotement (16; 116) en position fermée est assuré par la pénétration d'un élément de fermeture (72, 84, 82; 172) pouvant être réglé par la rotation de la partie pivotante dans un évidement (70, 17a, 17b; 117a, 117b) de l'élément de fermeture, lequel évidement est prévu sur le palier de pivotement (14; 114) et/ou le palier de fermeture (17; 117), qui est monté dans un endroit qui est à l'opposé du palier de pivotement (14; 114) en traversant le passage dans la roue (10), la partie pivotante (20; 120) étant bloquée par un élément de blocage en rotation (42) dans une position de blocage en rotation (figure 4) correspondant à la pénétration de l'élément de fermeture (72, 82, 84; 172) dans l'évidement (70, 17b, 17c; 117b, 177c), et ne peut être tournée en position libre en rotation (représentée en tiretés à la figure 3 et à la figure 8) hors de l'évidement (70, 17b, 17c; 117b, 177c) de l'élément de fermeture qu'après le dégagement de cet élément de blocage en rotation (42), éventuellement à l'encontre de l'action de l'élément de précontrainte en rotation (60).

7. Serrure à partie pivotante selon la revendication 6, caractérisée en ce que la position de sécurité de rotation (figure 7) de la partie pivotante (20; 120) correspond à la position de blocage en rotation (représentée en tiretés à la figure 8), et en ce que la partie pivotante (20; 120) est également bloquée dans la position de sécurité de rotation (figure 7) par l'élément de blocage en rotation (42).

8. Serrure à partie pivotante selon la revendication 6 ou 7, caractérisée en ce que l'élément de blocage en rotation est constitué par une serrure montée dans le moyeu de pivotement (16; 116), en particulier un cylindre de fermeture (42) dont l'axe est parallèle à l'axe de rotation (22).

9. Serrure à partie pivotante selon la revendication 8, caractérisée en ce que le logement du cylindre de fermeture reçu dans le moyeu de pivotement (16; 116) et la partie pivotante (20; 120) sont solidaires du coeur du cylindre (prolongement 56), l'élément de précontrainte en rotation (60) éventuellement présent étant constitué par un ressort de torsion hélicoïdal disposé à l'intérieur du moyeu de pivotement (16; 116), ce ressort s'appuyant par une extrémité contre le moyeu de pivotement (16; 116) et par l'autre extrémité contre le coeur du cylindre (56).

10. Serrure à partie pivotante selon la revendication 8 ou 9, caractérisée en ce que la clé (54; 154) du cylindre de fermeture (42) peut être retirée en position de blocage en rotation (figure 4) après fermeture du cylindre de fermeture (42) et peut être retirée, ou non retirée, dans la position de sécurité de rotation (figure 7).

11. Serrure à partie pivotante selon l'une quelconque des revendications 1 à 10, caractérisée en ce que l'élément de blocage (72; 172) et éventuellement un élément de fermeture (72; 172) situé du côté du moyeu sont constitués par une rainure tangentielle à l'axe de rotation (64) fraisée dans la partie pivotante (20; 120).

12. Serrure à partie pivotante selon l'une quelconque des revendications 1 à 10, caractérisée en ce que l'élément de blocage (172) et éventuellement un élément de fermeture situé du côté du moyeu sont constitués par une saillie de la partie pivotante (120).

13. Serrure à partie pivotante selon l'une quelconque des revendications 1 à 12, caractérisée en ce que le moyeu de pivotement (16; 116) est soumis à une tension par un élément de serrage de pivotement (24) en direction d'une position de fin de pivotement (représentée en traits mixtes à la figure 1).

14. Serrure à partie pivotante selon la revendication 13, caractérisée en ce que le moyeu de pivotement (16; 116) est serré en direction de la position de marche (représentée en traits mixtes à la figure 1).

15. Serrure à partie pivotante selon la revendication 13 ou 14, caractérisée en ce que l'élément de serrage de pivotement (24) est monté en étant recouvert entre la plaque du palier de pivotement (14a) et le moyeu de pivotement (16).

16. Serrure à partie pivotante selon la revendication 15, caractérisée en ce que l'élément de serrage de pivotement (24) est constitué par un ressort de tension, en particulier un ressort de traction hélicoïdal (24) monté dans un canal de forme courbe (16c) autour de l'axe de pivotement (18), et qui coopère d'une part avec la plaque de palier de pivotement (14a) et d'autre part avec le moyeu de pivotement (16).

17. Serrure à partie pivotante selon la revendication 16, caractérisée en ce que le canal de forme courbe (16c) entoure l'alésage de pivotement (16a) et est limité de préférence par une collerette de forme annulaire (16b) du moyeu de pivotement (16).

18. Serrure à partie pivotante selon l'une quelconque des revendications 13 à 17, caractérisée en ce que l'élément de serrage de pivotement (24) est incorporé sous précontrainte entre la plaque du palier de pivotement (14a) et le moyeu de pivotement (15).

19. Serrure à partie pivotante selon la revendication 18, caractérisée en ce que l'élément de serrage de pivotement (24) coopère par une extrémité avec une pièce d'ancrage libre (32) qui est montée à l'avance avec l'élément de serrage de pivotement (24) sur le moyeu de pivotement (16) ou sur le palier de pivotement (14) et, lors de l'assemblage du moyeu de pivotement (16) et du palier de pivotement (14), vient en engagement par concordance de formes avec le palier de pivotement (14) ou avec le moyeu de pivotement (16) après leur avoir transmis une précontrainte.

20. Serrure à partie pivotante selon l'une quelconque des revendications 1 à 19, caractérisée en ce que la partie pivotante (20) est maintenue, après rotation hors de sa position de blocage en rotation (représentée en traits mixtes à la figure 8), dans la position de rotation libre (représentée en tiretés à la figure 8) et par pivotement du moyeu de pivotement (16) hors de la position fermée (représentée en traits pleins à la figure 1) sur le parcours de pivotement qui suit jusqu'à la position de marche (représentée en traits mixtes à la figure 1) au moyen d'une piste d'appui (68) à l'avant de l'évidement (66) de l'élément de blocage, formant une partie de la piste de commande d'allure sensiblement continue à l'encontre de l'effet de l'élément de précontrainte en rotation (60) en position de rotation libre (représentée en tiretés à la figure 8), de manière qu'elle ne parvienne brusquement dans la position de sécurité de rotation (figure 7) avec pénétration simultanée de l'élément de blocage (72) dans l'évidement (66) qu'après avoir atteint la position de marche (représentée en traits mixtes à la figure 1), la pénétration de l'élément de blocage (72) dans l'évidement (66) facilitant éventuellement en plus l'approche de la partie pivotante (20) vers la position de marche (représentée en traits mixtes à la figure 1).

21. Serrure à partie pivotante selon l'une quelconque des revendications 1 à 19, caractérisée en ce que la partie pivotante (120), après pivotement de l'élément de fermeture (182, 184) de l'évidement (117b, 117c) pendant le parcours de pivotement du moyeu de pivotement (116) de la position de fermeture (représentée en traits pleins à la figure 1) à la position de marche (représentée en traits mixtes à la figure 1), peut être ramenée par l'élément de précontrainte en rotation (60) dans la position de sécurité de marche (figure 10), et en ce qu'une butée (190) de l'élément de blocage est prévue sur le palier de pivotement (114), contre laquelle l'élément de blocage (172) vient s'appliquer en position de butée sur le parcours de pivotement de la partie pivotante (120) avant d'atteindre la position de marche (représentée en traits mixtes à la figure 1), position dans laquelle la partie pivotante (120) est toujours disposée dans l'évidement constitué dans la roue.

22. Serrure à partie pivotante selon la revendication 21, caractérisée en ce que la butée (190) de l'élément de blocage est constituée sur la plaque (114a) du palier de pivotement, en particulier sur sa paroi latérale (114b).

23. Serrure à partie pivotante selon la revendication 21 ou 22, caractérisée en ce qu'une autre position stable n'est pas possible sur le parcours de pivotement de la partie pivotante (120) entre la position de butée et la position de marche, du fait que l'élément de blocage (172) a tendance à faire pivoter, par coopération avec l'évidement (166) ou la butée (190) de l'élément de blocage sous l'effet de l'élément de précontrainte en rotation (160), la partie pivotante (120) à partir d'une position intermédiaire quelconque soit vers la position de marche (représentée en traits mixtes à la figure 1) soit en position de butée dans laquelle elle pénètre dans la roue.

24. Serrure à partie pivotante selon l'une quelconque des revendications 1 à 23, caractérisée en ce que la fente d'entrée (17a, 17b; 117a, 117b) du palier de fermeture (17; 117), vue en direction de la partie pivotante (20; 120) se trouvant en position fermée (représentée en traits continus à la figure 1), est à deux étages avec un premier étage (17a; 117a) plus proche du moyeu de pivotement (16; 116) et plus large, qui occupe la totalité de la section transversale de la pièce, et avec un second étage (17b; 117b) qui s'y raccorde en étant plus éloigné du palier de pivotement et qui n'autorise le passage que pour l'extrémité (84; 184) de la partie pivotante qui supporte le crochet de blocage aplati (82; 182).

25. Serrure à partie pivotante selon l'une quelconque des revendications 1 à 24, caractérisée par un élément de liaison de montage reliant le palier de pivotement (14; 114) au palier de fermeture (17; 117), qui maintient les deux paliers (14, 17; 114, 117) éventuellement mobiles de façon limitée dans leur position relative correspondant à leur association de fonctionnement.

26. Serrure à partie pivotante selon l'une quelconque des revendications 1 à 24, caractérisée en ce que le palier de pivotement (214) et le palier de fermeture (217) sont disposés d'une façon connue en soi sur une partie en U en vue de la fixation à une fourche de roue, de manière que la partie en U entoure la jante de la roue et soit dirigée par ses branches de l'U (290a, 290b) sensiblement en direction de l'axe de la roue.

27. Serrure à partie pivotante selon la revendication 26, caractérisée en ce que la partie en U (290) est constitué d'une manière connue en soi en vue de la fixation amovible sur la fourche de la roue.

28. Serrure à partie pivotante selon la revendication 26 ou 27, caractérisée en ce que le palier de pivotement (214) et/ou le palier de fermeture (217) sont d'un seul tenant avec la partie en U (226) et réalisés par exemple en fonte malléable.

29. Serrure à partie pivotante selon l'une quelconque des revendications 26 à 28, caractérisée en ce que la partie en U (290) et éventuellement des parties du palier de pivotement (214) et/ou du palier de fermeture (217) sont recou- vertes de matière synthétique par extrusion.

30. Serrure à partie pivotante selon l'une quelconque des revendications 26 à 29, caractérisée en ce que la partie en U (290; 290'; 290") présente une section transversale creuse en forme de U ou en forme de double T, et en ce que la section transversale creuse est remplie au moins partiellement par un élément de remplissage de forme appropriée.

31. Serrure à partie pivotante selon l'une quelconque des revendications 1 à 30, caractérisée en ce qu'un dispositif de serrage entoure une pièce de serrage en forme de U (394c), qui présente aux extrémités libres de ses branches des mâchoires (394d) destinées à s'accrocher dans des contre-dépouille (394a) du palier de pivotement (314) ou du palier de fermeture (317), et en ce qu'il est prévu au sommet de la partie de serrage en U (394c) un alésage fileté (394e) destiné à la réception d'une vis de serrage (394f) qui peut être pressée contre la branche respective (312a) de la fourche de la roue de manière que les mâchoires (394d) puissent être serrées dans les contre-dépouilles (394a).

32. Serrure à partie pivotante selon la revendication 31, caractérisée en ce que le palier de pivotement (394) ou le palier de fermeture (317) présente une bague d'appui (394) tournée vers la branche respective de la fourche (312a ou 312b) en vue de l'appui sur la branche correspondance de la fourche et en ce que cet appui (394) présente sur son côté interne une contre-dépouille périphérique (394a) avec des fentes d'introduction de mâchoire (394b) disposées diamètralement à l'opposé l'une de l'autre de manière que les mâchoires (394d) puissent être introduites dans la région des fentes d'introduction de mâchoires (394b) jusqu'à la profondeur de la contre-dépouille (394a) dans la bague d'appui (394) et que le palier de pivotement (394) ou le palier de fermeture (317) puisse être ensuite tourné par rapport à la pièce de serrage en U (394c), les mâchoires (394d) pénétrant de ce fait dans les contre-dépouilles (394a) et une partie de coopération avec un outil (394g) d'une vis de serrage (394f) pouvant être avantageusement cassée par le dispositif de serrage, par exemple par le moment de rotation apparaissant lors du serrage.

33. Serrure à partie pivotante selon la revendication 31 ou 32, caractérisée en ce que pour adapter la serrure de la partie pivotante à des largeurs de fourche de roue différentes, le palier de pivotement (394) et le palier de fermeture (317) peuvent être fixés à des distances différentes de l'axe de la roue et l'un au oins des paliers peuvent être fixés dans le plan de la fourche de la roue dans des positions angulaires diverses de manière que la partie pivotante (320) soit au même niveau que le palier de fermeture (317) en position de fermeture.

34. Serrure à partie pivotante selon l'une quelconque des revendications 31 à 33, caractérisée en ce que le dispositif de serrage peut être recouvert par un couvercle de recouvrement (394i) pouvant être enclenché sur le palier de pivotement (314) ou sur le palier de fermeture (317).

35. Serrure à partie pivotante pour un véhicule, en particulier une bicyclette, comprenant une partie pivotante (120) qui est montée de façon pivotante autour d'un axe de pivotement (18) sur une partie de cadre (112a) latéralement contre une roue (10) munie d'un passage, à savoir entre une position fermée dans laquelle elle traverse le passage et ne peut pivoter, éventuellement en coopérant avec un palier de fermeture (117) monté sur une partie de cadre disposée à l'opposé, et une position de marche dans laquelle elle est dégagée de la roue (10) et ne peut pivoter, la partie pivotante ou un prolongement (56) de la partie pivotante (120) qui est situé du côté de l'axe de pivotement étant monté à rotation dans un moyeu (116) autour d'un axe (22) perpendiculaire à l'axe de pivotement (18), et le moyeu de pivotement (116) étant monté de façon pivotante autour de l'axe de pivotement (18) dans un palier de pivotement (114) à fixer au cadre (12), constitué par une plaque de palier de pivotement (114a) disposée transversalement à l'axe de pivotement (18), et le blocage du mouvement de pivotement étant assuré, au moins en position de marche, par l'introduction d'un élément de blocage (172) prévu sur la partie pivotante (120) dans la région du moyeu dans un évidement pour l'élément de blocage (166) du palier de pivotement (114) et cette introduction pouvant être réalisée ou dégagée par rotation de la partie pivotante (120) ou de son prolongement (56) autour de son axe longitudinal (22) dans ou hors d'une position bloquée en rotation, l'élément de blocage (172) coopèrant avec une piste de contact disposée a l'extérieur du moyeu de pivotement (116) et liée à la plaque du palier de pivotement (114a), piste qui comporte ou forme l'évidement pour l'élément de blocage (166), la partie pivotante (120) étant rappelée, après dégagement d'un élément de fermeture (182, 184) hors d'un évidement (117b, 117c) pour élément de fermeture, sur le parcours de pivotement du moyeu de pivotement (116) de la position fermée (représentée en traits continus sur la figure 1) vers la position de marche (représentée en traits mixtes sur la figure 1), par un élément de précontrainte de rotation (60), vers la position bloquée en rotation (figure 10), une butée (190) pour l'élément de blocage étant prévue sur le palier de pivotement (114), contre laquelle l'élément de blocage (172) vient s'appliquer en butée sur le parcours de pivotement de la partie pivotante (120) avant d'atteindre la position de marche (représentée en traits mixtes à la figure 1), caractérisé en ce que l'élément de blocage (172) est disposé au voisinage du moyeu, en ce que sa piste de contact s'étend dans la direction de l'axe de pivotement (18) et suit un secteur de cercle autour de cet axe, et en ce que la butée (190) pour l'élément de blocage est formée sur la piste de contact, de telle sorte que la partie pivotante (120) traverse encore le passage de la roue dans la position de butée.

36. Serrure à partie pivotante selon la revendication 35, caractérisée en ce qu'elle comporte subsidiairement les caractéristiques de l'une des revendications 2 à 4, 6 à 19 et 22 à 34.
